(19) Europäisches Patentamt
European Patent Office
Office européen des brevets

(11) **EP 2 587 623 B1**

(12) # EUROPEAN PATENT SPECIFICATION

(45) Date of publication and mention
of the grant of the patent:
**29.06.2016 Bulletin 2016/26**

(51) Int Cl.:
*H02J 7/35* *(2006.01)*     *H02J 1/12* *(2006.01)*
*H02J 3/38* *(2006.01)*     *H02J 7/34* *(2006.01)*

(21) Application number: **11797913.8**

(22) Date of filing: **02.05.2011**

(86) International application number:
**PCT/JP2011/060512**

(87) International publication number:
**WO 2011/162025 (29.12.2011 Gazette 2011/52)**

(54) **DC POWER DISTRIBUTION SYSTEM**

GLEICHSTROMVERSORGUNGSSYSTEM

SYSTÈME DE DISTRIBUTION ÉLECTRIQUE À COURANT CONTINU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2010 JP 2010141500**

(43) Date of publication of application:
**01.05.2013 Bulletin 2013/18**

(73) Proprietor: **Sharp Kabushiki Kaisha
Osaka-shi, Osaka 545-8522 (JP)**

(72) Inventor: **SATO, Katsuhiko
Osaka-shi, Osaka 545-8522 (JP)**

(74) Representative: **Müller Hoffmann & Partner
Patentanwälte mbB
St.-Martin-Strasse 58
81541 München (DE)**

(56) References cited:
**EP-A2- 2 330 726     JP-A- 2002 271 997
JP-A- 2003 339 118     JP-A- 2003 339 118
JP-A- 2006 129 585     JP-A- 2006 129 585
JP-A- 2008 048 544     JP-A- 2008 048 544
JP-A- 2009 176 575     JP-A- 2009 176 575
JP-A- 2010 098 793     JP-A- 2010 098 793**

**Description**

TECHNICAL FIELD

The present invention relates to a control system for direct current (DC) power distribution including a DC power distribution system for supplying DC power to a loading device, a first power conversion device for performing voltage conversion over power generated from a photovoltaic power generation device and supplying the converted power to the DC power distribution system, a second power conversion device for performing voltage conversion between a power storage device and the DC power distribution system, and a third power conversion device for performing power conversion between an alternate current (AC) system and the DC power distribution system.

BACKGROUND ART

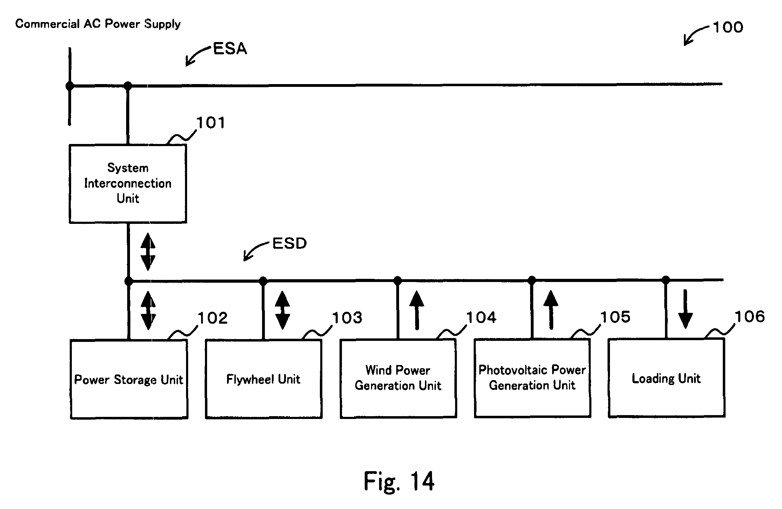

For example, as shown in Fig. 14, some conventional control systems for DC power distribution include a DC power distribution system ESD for supplying power to a loading device, a system interconnection unit 101, a power storage unit 102, a flywheel unit 103, a wind power generation unit 104, a photovoltaic power generation unit 105, and a loading unit 106 (see Patent Document 1, for example).

Although not illustrated, the system interconnection unit 101 is configured to include a DC-AC inverter for converting power of the DC power distribution system ESD and supplying the converted power to an AC power system ESA, and an AC-DC converter for converting power of the AC power system ESA and supplying the converted power to the DC power distribution system ESD. Moreover, although not illustrated, the power storage unit 102 is configured to include a power storage device and a power conversion device for performing voltage conversion between the power storage device and the DC power distribution system ESD, thereby supplying power from one side to the other side. Similarly, although not illustrated, the flywheel unit 103 is configured to include a flywheel and a power conversion device for performing voltage conversion between the flywheel and the DC power distribution system ESD, thereby supplying power from one side to the other side. Although not illustrated, the wind power generation unit 104 is configured to include a wind power generation device and a power conversion device for performing voltage conversion over power generated by the wind power generation device, thereby supplying the converted power to the DC power distribution system ESD. Although not illustrated, the photovoltaic power generation unit 105 is configured to include a photovoltaic power generation device and a power conversion device for performing voltage conversion over power generated by the photovoltaic power generation device, thereby supplying the converted power to the DC power distribution system ESD.

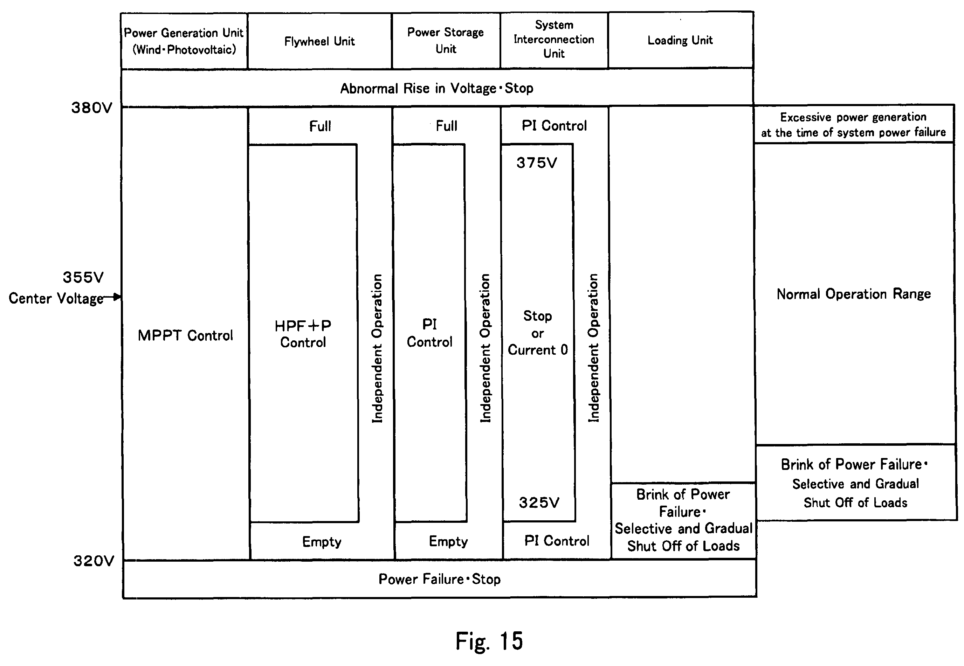

In the control system for DC power distribution described above, as shown in Fig. 15, each of the power conversion devices connected to the DC power distribution system performs an operation control based on the voltage of the DC power distribution system, independently and irrespective of operations of other power conversion devices.

PRIOR ART DOCUMENT

PATENT DOCUMENT

Patent Document 1 : Japanese Unexamined Patent Publication No. 2003-339118

This document discloses:

A control system for DC power distribution comprising:

a DC power distribution system for supplying DC power to a loading device; a first power conversion device for performing voltage conversion over power generated from a photovoltaic power generation device, thereby supplying the converted power to the DC power distribution system;

a second power conversion device for performing voltage conversion between a first power storage device which is always connected to the DC power distribution system and the DC power distribution system, thereby supplying power from one side to the other side; and a third power conversion device for performing power conversion between an AC power system and the DC power distribution system, thereby supplying power from one side to the other side.

SUMMARY OF THE INVENTION

PROBLEMS TO BE SOLVED BY THE INVENTION

However, in the control system for DC power distribution 100 described above, each power conversion device is operated irrespective of the operations of the other power conversion devices. For this reason, there is a problem in that it is hard to flexibly take a measure against a demand of a user of the control system for DC power distribution or a change in restrictions depending on social conditions or the like.

More specifically, the power conversion device of the power storage unit 102 shown in Fig. 14 performs only a preset operation in which discharge is performed until the stored power becomes empty when a load of a power storage device is increased, and charge is performed until a fully charged state is obtained when the stored power becomes empty. For example, there is a problem in that a driving control for reducing $CO_2$ at a maximum, a driving control for relieving a deterioration in a storage battery or the like cannot be flexibly switched depending on a demand of a user or the like.

Furthermore, in the control system for DC power distribution 100 described above, a plurality of power conversion devices are operated irrespective of the operations of the other power supply devices. For this reason, for example, when the plurality of power conversion devices are set to perform output at the same voltage, there has been a problem in that the plurality of power conversion devices are influenced by mutual controls, resulting in an unstable control system.

The present invention has been made in view of the above problems, and an object thereof is to provide a control system for DC power distribution including a plurality of power supply devices which can flexibly take a measure against a demand of a user or a change in restrictions depending on social conditions by having the plurality of power conversion devices cooperatively operate with each other.

MEANS FOR SOLVING THE PROBLEM

The above objects are solved by the claimed matter according to the independent claim.

A control system for DC power distribution according to the present invention for achieving the above object has a first feature that the control system comprises:

a DC power distribution system for supplying DC power to a loading device;
a first power conversion device for performing voltage conversion over power generated from a photovoltaic power generation device, thereby supplying the converted power to the DC power distribution system;
a second power conversion device for performing voltage conversion between a first power storage device which is always connected to the DC power distribution system and the DC power distribution system, thereby supplying power from one side to the other side;
a third power conversion device for performing power conversion between an AC power system and the DC power distribution system, thereby supplying power from one side to the other side;
an operation mode setting portion for setting an operation mode of the control system for DC power distribution depending on operation mode determination information for setting the operation mode; and
an operation control portion for setting a first control parameter to the second power conversion device and setting a second control parameter to the third power conversion device depending on the operation mode set by the operation mode setting portion, the second power conversion device controls a direction, a start, and a stop of power supply depending on a voltage of the DC power distribution system and the first control parameter, and
the third power conversion device controls a direction, a start, and a stop of power supply depending on the voltage of the DC power distribution system and the second control parameter.

The control system for DC power distribution according to the present invention for achieving the above object has a second feature that the control system comprises:

a DC power distribution system for supplying DC power to a loading device;
a first power conversion device for performing voltage conversion over power generated from a photovoltaic power generation device, thereby supplying the converted power to the DC power distribution system;
a second power conversion device for performing voltage conversion between a first power storage device which is always connected to the DC power distribution system and the DC power distribution system, thereby supplying power from one side to the other side;
a third power conversion device for performing power conversion between an AC power system and the DC power distribution system, thereby supplying power from one side to the other side;
an operation mode setting portion for setting an operation mode of the control system for DC power distribution depending on operation mode determination information for setting the operation mode; and
an operation control portion for setting a first control parameter and a second control parameter, respectively, depending on the operation mode set by the operation mode setting portion, and
the operation control portion controls a direction, a start, and a stop of power supply of the second power conversion device depending on a voltage of the DC power distribution system and the first control parameter, and controls a direction, a start, and a stop of power supply of the third power conversion device depending on the voltage of the DC power distribution system and the second control parameter.

The control system for DC power distribution according to the present invention having any of the above features has a third feature that
the first control parameter includes a charge starting voltage for defining the voltage of the DC power distribution system at which power starts to be supplied from the DC power distribution system to the first power storage device and a discharge starting voltage for defining the voltage of the DC power distribution system at which power starts to be supplied from the first power storage device to the DC power distribution system, and

the second control parameter includes a DC-AC (DC to AC conversion) starting voltage for defining the voltage of the DC power distribution system at which power starts to be supplied from the DC power distribution system to the AC power system, and a AC-DC (AC to DC conversion) starting voltage for defining the voltage of the DC power distribution system at which power starts to be supplied from the AC power system to the DC power distribution system.

The control system for DC power distribution according to the present invention having the above features has a fourth feature that the control system comprises an information collecting portion for acquiring parameter setting information for setting the first control parameter and the second control parameter, and the operation control portion sets the first control parameter and the second control parameter based on the parameter setting information acquired by the information collecting portion when the operation mode is changed by the operation mode setting portion.

The control system for DC power distribution according to the present invention having the above features has a fifth feature that the operation mode includes a first driving mode for reducing an amount of power to be supplied from the AC power system to the DC power distribution system, and the operation control portion sets the first control parameter and the second control parameter such that the DC-AC starting voltage is higher than the charge starting voltage and the discharge starting voltage is higher than the AC-DC starting voltage when the first driving mode is set.

The control system for DC power distribution according to the present invention having the above third to fifth features has a sixth feature that the operation mode includes a second driving mode for switching the setting of the first control parameter depending on an amount of power stored in the first power storage device, the control system includes a first information collecting portion for appropriately acquiring the amount of power stored in the first power storage device from the second power conversion device while the second driving mode is set, and the operation control portion appropriately sets the charge starting voltage and the discharge starting voltage depending on the amount of the stored power while the second driving mode is set.

The control system for DC power distribution according to the present invention having the above third to sixth features has a seventh feature that the AC power system is connected to a commercial AC power supply, the operation mode includes a third driving mode for controlling a power fee, the control system includes a second information collecting portion for acquiring fee information about a power purchasing price and a power selling price of the commercial AC power supply which are set for each predetermined time zone when the third driving mode is set, and the operation control portion

sets the charge starting voltage to be higher than the DC-AC starting voltage and sets the discharge starting voltage to be higher than the AC-DC starting voltage in a time zone in which the power selling price is set high while the third driving mode is set, and sets the charge starting voltage to be lower than the AC-DC starting voltage in a time zone in which the power selling price is set low while the third driving mode is set.

The control system for DC power distribution according to the present invention having the above features has an eighth feature that the first control parameter includes a charging current value in a case where power is supplied from the DC power distribution system to the first power storage device, and the operation control portion sets the charging current value to be decreased depending on a drop in the voltage of the DC power distribution system.

The control system for DC power distribution according to the present invention having any one of the above features has a ninth feature that the second control parameter includes a maximum AC-DC current value of a current to be supplied from the AC power system to the DC power distribution system in the third power conversion device.

The control system for DC power distribution according to the present invention having the above features has a tenth feature that the operation mode includes a fourth driving mode for leveling power to be supplied from the AC power system to the DC power distribution system, the control system includes a third information collecting portion for acquiring an actual value of consumed power of the loading device and an actual value of an amount of power generated from the photovoltaic power generation device when the fourth driving mode is set, and the operation control portion sets the maximum AC-DC current value depending on the actual value of the consumed power and the actual value of the amount of the generated power when the fourth driving mode is set.

The control system for DC power distribution according to the present invention having any one of the above features has an eleventh feature that the first control parameter includes a charging current value in a case where power is supplied from the DC power distribution system to the first power storage device, and a maximum discharging current value in a case where power is supplied from the first power storage device to the DC power distribution system.

The control system for DC power distribution according to the present invention having the above features has a twelfth feature that

the operation mode includes a rapid charging mode for charging the first power storage device more rapidly than usual, a normal charging/discharging mode which is preset by the operation mode setting portion, and a little discharging mode for discharging the first power storage device more slowly than usual,

the control system includes a fourth information collecting portion for acquiring deterioration information about the first power storage device,

the operation mode setting portion determines whether the first power storage device is deteriorated or not based on the deterioration information, when determining that the first power storage device is deteriorated, the operation mode setting portion sets the operation mode to the rapid charging mode, sets the operation mode to the little discharging mode when the first power storage device is fully charged, sets the operation mode to the rapid charging mode when the discharge of the first power storage device is ended, and sets the operation mode to the normal charging/discharging mode when the first power storage device is fully charged, and

the operation control portion sets the charging current value to be greater than the charging current value in the normal charging/discharging mode depending on a feature of the first power storage device when the rapid charging mode is set, and

sets the maximum discharging current value to be smaller than the maximum discharging current value in the normal charging/discharging mode depending on the feature of the first power storage device when the little discharging mode is set.

The control system for DC power distribution according to the present invention having any one of the above features has a thirteenth feature that

the operation control portion sets a third control parameter to the first power conversion device, and

the first power conversion device performs either of a normal operation for performing an operation such that output power is maximized, or a constant voltage operation for performing an operation such that an output voltage value is constant, depending on the voltage of the DC power distribution system and the third control parameter.

The control system for DC power distribution according to the present invention having the above features has a fourteenth feature that the third control parameter includes a constant voltage driving starting voltage for defining the voltage of the DC power distribution system at which the constant voltage operation is started.

The control system for DC power distribution according to the present invention having any one of the above features has a fifteenth feature that the control system further comprises a fourth power conversion device for performing voltage conversion between a second power storage device and the DC power distribution system, thereby supplying power from one side to the other side, the second power storage device being configured to freely perform connection and disconnection to and from the DC power distribution system.

EFFECTS OF THE INVENTION

According to the control system for DC power distribution having the features described above, each of the plurality of power conversion devices can be made to operate cooperatively easily by only setting the control parameter. Consequently, also in the case where the number of the power supply devices is increased/decreased or the case where a power failure has occurred in an AC power system, for example, the case where a part of the power supply devices are stopped due to a breakdown or the like, it is possible to stably implement an operation control which flexibly takes a measure against a demand of a user or a change in restrictions depending on social conditions. Furthermore, in the control system for DC power distribution having the feature described above, the plurality of power conversion devices are cooperatively operated. Therefore, it is possible to prevent the control system from becoming unstable by the influence of the mutual controls.

Moreover, according to the control system for DC power distribution having the fifth and sixth features, the amount of power to be supplied from the AC power system to the DC power distribution system is reduced. Therefore, it is possible to control the amount of discharge of $CO_2$. Furthermore, according to the control system for DC power distribution having the seventh feature, power selling is preferentially performed at the time when a power selling price is set high. Therefore, it is possible to reduce a power fee. According to the control system for DC power distribution having the eighth feature, the charging current is set to be decreased depending on the drop in the voltage of the control system for DC power distribution. Therefore, it is possible to stabilize the voltage of the DC power distribution system. The control system for DC power distribution having the ninth and tenth features levels the power to be supplied from the AC power system to the DC power distribution system. Therefore, it is possible to suppress fluctuation in power generated by a power company in the case where the AC power system is connected to a commercial AC power supply, for example. According to the control system for DC power distribution having the eleventh and twelfth features, when it is determined that the first power storage device is deteriorated, it is possible to relieve the deterioration in the power storage device by executing the rapid charging mode, the little discharging mode, and the rapid charging mode, in this order.

BRIEF DESCRIPTION OF THE DRAWINGS

Fig. 1 is a schematic block diagram showing an example of a schematic structure of a control system for DC power distribution and peripheral devices according to a first embodiment of the present invention.

Fig. 2 is a schematic block diagram showing an example of a structure of a display device connected to the control system for DC power distribution according to the present invention.

Fig. 3 is a graph showing a relationship among an amount of sunshine, an output voltage and an output current of a photovoltaic power generation device.

Fig. 4 is a table showing an example of operation modes of the control system for DC power distribution according to the first embodiment of the present invention.

Fig. 5 is a table showing a voltage setting method of a $CO_2$ reduction mode of the control system for DC power distribution according to the first embodiment of the present invention.

Fig. 6 is a table showing a voltage setting method of an economy priority mode of the control system for DC power distribution according to the first embodiment of the present invention.

Fig. 7 is a graph showing a method of setting the maximum discharging current value in the economy priority mode of the control system for DC power distribution according to the first embodiment of the present invention.

Fig. 8 is a graph showing an actual value of consumed power of a loading device and an actual value of an amount of power generated from the photovoltaic power generation device in a leveling mode of the control system for DC power distribution according to the first embodiment of the present invention.

Fig. 9 is a flowchart showing a storage battery deterioration relieving mode of the control system for DC power distribution according to the first embodiment of the present invention.

Fig. 10 is a table showing a voltage setting method of a $CO_2$ reduction mode of a control system for DC power distribution according to another embodiment of the present invention.

Fig. 11 is a table showing a method of setting a charging current value in an economy priority mode of the control system for DC power distribution according to another embodiment of the present invention.

Fig. 12 is a schematic block diagram showing an example of a schematic structure of the control system for DC power distribution and peripheral devices according to another embodiment of the present invention.

Fig. 13 is a table showing a method of setting a discharge starting voltage in the storage battery deterioration relieving mode of the control system for DC power distribution according to another embodiment of the present invention.

Fig. 14 is a schematic block diagram showing an example of a schematic structure of a control system for DC power distribution according to the prior art.

Fig. 15 is a block diagram showing an operation of the control system for DC power distribution according to the prior art.

MODE FOR CARRYING OUT THE INVENTION

An embodiment of a control system for DC power distribution according to the present invention (hereinafter, appropriately referred to as "a control system according to the present invention") will be described below with reference to the drawings.

First Embodiment

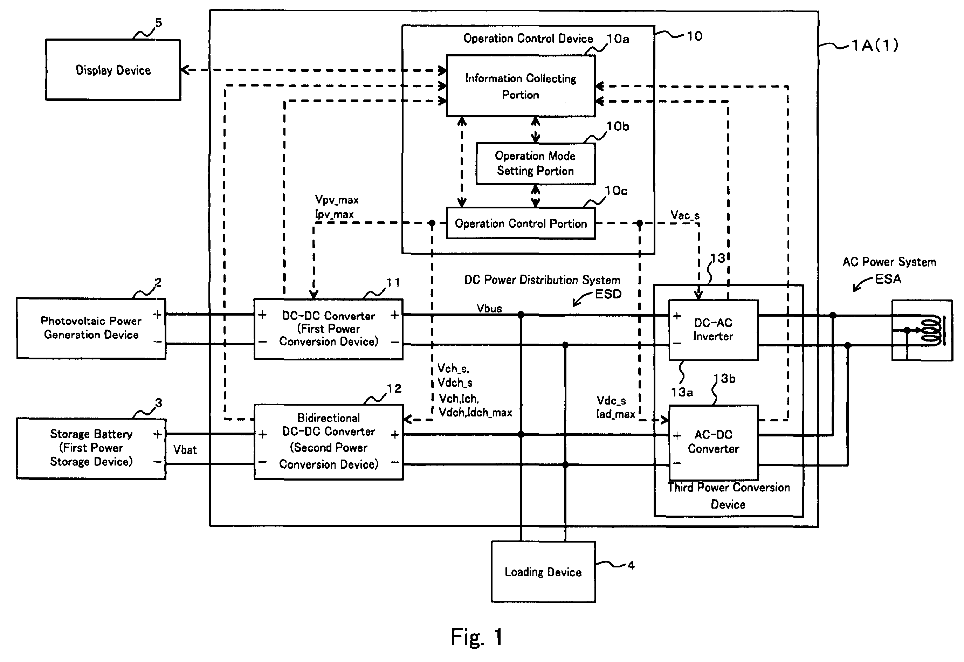

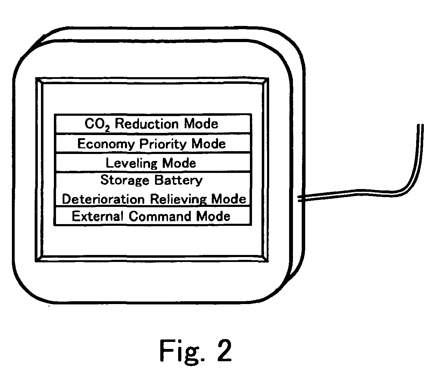

A first embodiment of the control system according to the present invention will be described with reference to Figs. 1 and 2.

First of all, a structure of a control system 1 according to the present invention in the present embodiment will be described with reference to Figs. 1 and 2. Fig. 1 shows an example of a schematic structure of a control system 1A according to the present invention and peripheral devices, and Fig. 2 shows an example of a display of a display device 5 connected to the control system 1A according to the present invention.

As shown in Fig. 1, the control system 1A according to the present invention is configured to include a DC power distribution system ESD for supplying DC power to a loading device 4, a first power conversion device 11 for performing voltage conversion over power generated by a photovoltaic power generation device 2 and supplying the converted power to the DC power distribution system ESD, a second power conversion device 12 for performing voltage conversion between a first power storage device 3 and the DC power distribution system ESD and supplying the converted power from one side to the other side, a third power conversion device 13 for converting AC power to DC power or DC power to AC power between an AC power system ESA and the DC power distribution system ESD and supplying the converted power from one side to the other side, and an operation control device 10 for setting an operation of the control system 1A according to the present invention.

In the control system 1A according to the present invention in the present embodiment, the AC power system ESA is connected to a commercial AC power supply (for example, a single-phase three-wire system 200 [V]), and the third power conversion device 13 is configured to carry out system interconnection to the AC power system ESA, thereby enabling a reverse power flow. There is employed a structure in which, when AC power is subjected to the reverse power flow and is thus supplied to the AC power system ESA, a power company performs purchase depending on an amount of power in accordance with a contract made between the power company and a user of the control system 1 according to the present invention.

The operation control device 10 includes an operation mode setting portion 10b for setting an operation mode depending on operation mode determination information for setting an operation mode of the control system 1A according to the present invention, and an operation control portion 10c for setting a first control parameter to the second power conversion device and a second control parameter to the third power conversion device 13, respectively, depending on the operation mode set by the operation mode setting portion 10b.

In the present embodiment, an external operation mode to be presented to a user and an internal operation mode to be set to an operation control portion 11c by an operation mode setting portion 11b are assumed as the operation mode.

The first control parameter according to the present embodiment includes a charge starting voltage Vch_s for defining a voltage of the DC power distribution system ESD at which power starts to be supplied from the DC power distribution system ESD to the first power storage device, a discharge starting voltage Vdch_s for defining the voltage of the DC power distribution system ESD at which power starts to be supplied from the first power storage device to the DC power distribution system ESD, a charging current value Ich and a charging voltage value Vch in the case where power is supplied from the DC power distribution system ESD to the first power storage device, and a discharging voltage value Vdch and a maximum discharging current value Idch_max in the case where power is supplied from the first power storage device to the DC power distribution system ESD.

Moreover, the second control parameter according to the present embodiment includes a DC-AC starting voltage Vac_s for defining a voltage of the DC power distribution system ESD at which power starts to be supplied from the DC power distribution system ESD to the AC power system ESA, a AC-DC starting voltage Vdc_s for defining the voltage of the DC power distribution system ESD at which power starts to be supplied from the AC power system ESA to the DC power distribution system ESD, and a maximum AC-DC current value Iad_max of a current to be supplied from the AC power system ESA to the DC power distribution system ESD in the third power conversion device 13.

The operation control device 10 according to the present embodiment further includes an information collecting portion 10a for acquiring operation mode determination information from the display device 5 configured to enable a user to input a setting of an operation mode and outputting the operation mode determination information to the operation mode setting portion 10b. Fig. 2 shows an example of the display of the display device 5, and the display device 5 has an external operation mode displayed thereon and has such a structure that the user performs selection.

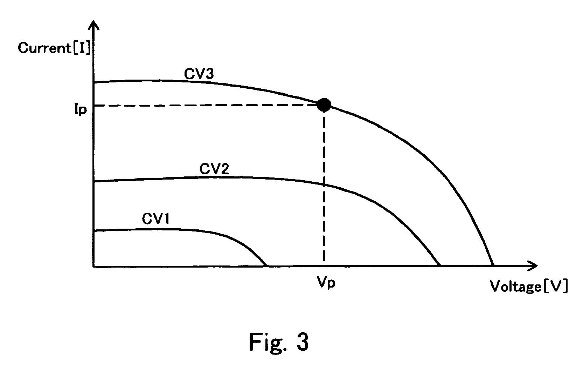

In the present embodiment, the photovoltaic power generation device 2 is configured by connecting, in series, a plurality of solar cell modules disposed on a roof of a building or the like, and serves to directly convert solar light into electrical energy, thereby generating DC power. Fig. 3 shows an example of a relationship among an amount of sunshine, an output voltage and an output current of the photovoltaic power generation device 2. In Fig. 3, each of curved lines CV1 to CV3 shows an example of an IV characteristic for each amount of sunshine, and the curved line CV1 indicates the case where the amount of sunshine is small, the curved line CV2 indicates the case of a usual amount of sunshine and the curved line CV3 indicates the case where the amount of sunshine is large.

In the present embodiment, the DC-DC converter 11 is one example of the first power conversion device and serves to convert the output voltage of the photovoltaic power generation device 2 into a predetermined DC voltage. The DC-DC converter 11 performs a maximum power tracking control (an MPPT control) such that the photovoltaic power generation device 2 outputs maximum power even in the case where the amount of sunshine fluctuates. More specifically, the DC-DC converter 11 detects an output current Ipv and an output voltage Vpv of the photovoltaic power generation device 2 and performs a control to maximize Ipv x Vpv. For example, in the case where the amount of sunshine is indicated by the curved line CV3 shown in Fig. 3, an operation is performed on a point where the output current Ipv = Ip and the output voltage Vpv = Vp are obtained.

A voltage Vbus of the DC power distribution system ESD is changed based on a total power amount that is a total of output power of the DC-DC converter 11, consumed power of the loading device 4, and discharging power or charging power through a charging/discharging operation of the storage battery 3 which will be described below. The total of the respective amounts of power is obtained through addition by setting, as positive values, the output power of the DC-DC converter 11 and the discharging power of the storage battery 3 which are to be supplied to the DC power distribution system ESD and setting, as negative values, the charging power of the storage battery and the consumed power of the loading device 4 which are to be supplied from the DC power distribution system ESD. The voltage Vbus is raised when the total power amount is positive, and the voltage Vbus is lowered when the total power amount is negative. For this reason, in the present embodiment, a constant voltage driving starting voltage Vpv_max is set to be a third control parameter in order to prevent an overvoltage of the DC power distribution system ESD.

When the voltage Vbus is lower than the constant voltage driving starting voltage Vpv_max, the DC-DC converter 11 performs the MPPT control (a normal operation). When the voltage Vbus is higher than the constant voltage driving starting voltage Vpv_max, the DC-DC converter 11 stops the MPPT control and makes a transition to a constant voltage operation to cause an output voltage value to be a constant value so that the voltage Vbus does not exceed the constant voltage driving starting voltage Vpv_max. Similarly, the constant current driving starting voltage Ipv_max is set in order to prevent an overcurrent. In the present embodiment, since there is a possibility that the set values of the constant voltage driving starting voltage Vpv_max and the constant current driving starting voltage Ipv_max be changed in order to operate the DC-DC converter 11 cooperatively with other power conversion devices, the set values can be varied by the operation control device 10.

Although the description has been given to the case where the first power conversion device is configured by one DC-DC converter 11 in the present embodiment, the first power conversion device may be configured by connecting a plurality of DC-DC converters 11 in parallel, or other structures may be employed.

In the present embodiment, the storage battery 3 is one example of the first power storage device and the storage battery 3 is configured by a lithium ion battery. Although the lithium ion battery will be described as an example in the present embodiment, another battery such as sodium or sulfur battery may be used. The storage battery 3 charges the power supplied from the DC power distribution system ESD through a bidirectional DC-DC converter 12 which will be described below, and discharges the charged power to the DC power distribution system ESD through the bidirectional DC-DC converter 12.

In the present embodiment, the bidirectional DC-DC converter 12 is one example of the second power conversion device and controls a power supplying direction (charging or discharging), and a start and a stop of power supply depending on the voltage of the DC power distribution system ESD and the first control parameter, that is, the charge starting voltage Vch_s, the discharge starting voltage Vdch_s, the charging current value Ich, the charging voltage value Vch, the discharging voltage value Vdch, and the maximum discharging current value Idch_max.

In a charging operation, the bidirectional DC-DC converter 12 converts a current flowing from the DC power distribution system ESD into a charging current having the charging current value Ich or converts the voltage Vbus of the DC power distribution system ESD into a charging voltage having the charging voltage value Vch, thereby supplying power to the storage battery 3.

More specifically, at the time of the charging operation, if a charging amount of the storage battery 3 is small and the voltage Vbat of the storage battery 3 is lower than the charging voltage value Vch, the bidirectional DC-DC converter 12 converts the current flowing from the DC power distribution system ESD into the charging current having the charging current value Ich and thus charges the storage battery 3. When the charging amount is increased so that the value of the output voltage (charging voltage) of the bidirectional DC-DC converter 12 reaches the charging voltage value Vch, the value of the charging voltage is maintained to the charging voltage value Vch to perform charging until a fully charged state is obtained. When the fully charged state is obtained and the voltage Vbat of the storage battery 3 reaches the charging voltage value Vch, the charging current becomes zero and the charging is thus stopped.

Furthermore, at the time of a discharging operation, the bidirectional DC-DC converter 12 converts the voltage Vbat of the storage battery 3 into the discharging voltage value Vdch, and converts a current flowing to the DC power distribution system ESD so as not to exceed the maximum discharging current value Idch_max. Consequently, if the value of the voltage Vbus of the DC power distribution system ESD is smaller than the discharging voltage value Vdch, the bidirectional DC-DC converter 12 supplies the power stored in the storage battery 3 to the DC power distribution system ESD.

Although the description has been given on the assumption of the case where the second power conversion device is configured by one bidirectional DC-DC converter 12 in the present embodiment, it is also possible to employ other structures, for example, a structure including two converters, that is, a charging converter and a discharging converter, a structure in which a plurality of bidirectional DC-DC converters 12 are connected in parallel, and the like. In the case where the second power conversion device is configured by connecting the plurality of bidirectional DC-DC converters 12 in parallel, the first control parameter may be configured to set different values for the respective bidirectional DC-DC converters 12, or may be configured to set the same value.

The third power conversion device 13 controls a power supplying direction (AC to DC or DC to AC), and a start and a stop of power supply depending on the voltage Vbus of the DC power distribution system ESD and the second control parameter, that is, the DC-AC starting voltage Vac_s, the AC-DC starting voltage Vdc_s and the maximum AC-DC current value Iad_max.

The third power conversion device 13 according to the present embodiment is configured by a DC-AC inverter 13a for converting the DC power of the DC power distribution system ESD into AC power having the same voltage and frequency as a commercial AC power supply, thereby supplying the AC power to the AC power system ESA, and an AC-DC converter 13b for converting the AC power of the AC power system ESA into DC power, thereby supplying the DC power to the DC power distribution system ESD, and controls an output current such that the voltage Vbus of the DC power distribution system ESD has a certain voltage value Vac. In the present embodiment, the DC-AC inverter 13a functions as a system interconnection inverter for performing system interconnection with the commercial AC power supply connected to the DC power distribution system ESD.

More specifically, when the voltage Vbus of the DC power distribution system ESD is increased to be higher than the DC-AC starting voltage Vac_s, the DC-AC inverter 13a converts the DC power of the DC power supply system into the AC power having the same voltage and frequency as the commercial AC power supply to carry out a reverse power flow to the AC power system ESA, and when the voltage Vbus of the DC power distribution system ESD is decreased to be lower than the AC-DC starting voltage Vdc_s, the AC-DC converter 13b converts the AC power of the AC power system ESA into DC power and thus supplies the DC power to the DC power distribution system ESD. The AC-DC converter 13b according to the present embodiment has the maximum AC-DC current value Iad_max set thereto in order to limit the power to be supplied, and the output voltage value becomes smaller than the voltage value Vac when the output current value reaches the maximum AC-DC current value Iad_max.

Although the third power conversion device 13 is configured by one DC-AC inverter 13a and one AC-DC converter 13b in the present embodiment, the present invention is not limited thereto, and the DC-AC inverter 13a may be configured by connecting a plurality of DC-AC inverters 13a in parallel, and the AC-DC converter 13b may be configured by connecting a plurality of AC-DC converters 13b in parallel, for example. In addition, the third power conversion device 13 may be configured by one bidirectional inverter. In the case where the plurality of DC-AC inverters 13a are connected in parallel in the third power conversion device 13, the second control parameter may be configured to set different values for the respective DC-AC inverters 13a or may be configured to set the same value. Similarly, in the case where the plurality of AC-DC converters 13b are connected in parallel, the second control parameter may be configured to set different values for the respective AC-DC converters 13b, or may be configured to set the same value.

In the present embodiment, an electrical apparatus to be operated by DC power is assumed as the loading device 4. For example, a power factor correction circuit PFC for taking a countermeasure against higher harmonics is provided on an internal power supply board in a television set, and an output voltage of the power factor correction circuit PFC is a DC voltage. Therefore, in the television set including the power factor correction circuit PFC, it is possible to connect an output side of the power factor correction circuit PFC to the DC power distribution system ESD. Similarly, in household electric appliances to be utilized by conversion of AC power into DC power, it is possible to employ such a structure as to directly use a DC voltage and to enable connection to the DC power distribution system ESD.

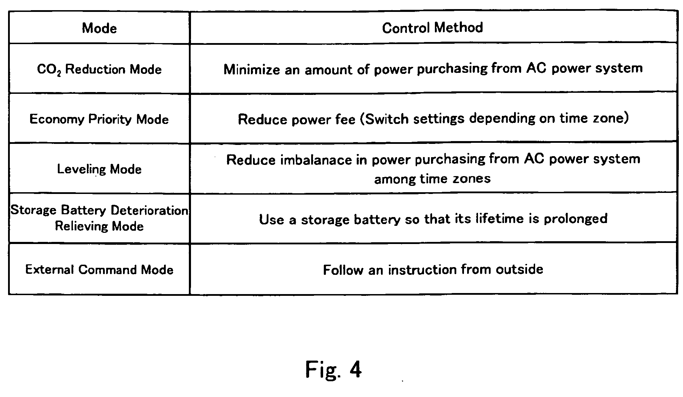

Next, the operation of the control system 1A according to the present invention will be described with reference to Figs. 4 to 9.

In the present embodiment, as shown in Fig. 4, five driving modes are set as an external operation mode to be presented to a user. More specifically, the five driving modes include a $CO_2$ reduction mode (corresponding to a first driving mode) for reducing an amount of power to be supplied from the AC power system ESA to the DC power distribution system ESD, an economy priority mode (corresponding to a third driving mode) for controlling a power fee, a leveling mode (corresponding to a fourth driving mode) for leveling power to be supplied from the AC power system ESA to the DC power distribution system ESD, a storage battery deterioration relieving mode, and an external command mode.

<$CO_2$ Reduction Mode>

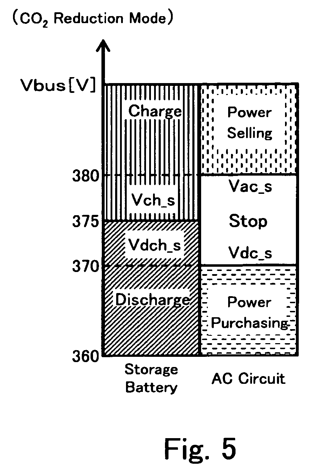

The $CO_2$ reduction mode will be described with reference to Fig. 5. In the $CO_2$ reduction mode, when the amount of power generated by the photovoltaic power generation device 2 is larger than the consumed power of the loading device 4, excess generated power is preferentially changed into the storage battery 3, and if there is further excess generated power, the excess generated power is supplied to the AC power system ESA to perform power selling. In the case where the amount of power generated by the photovoltaic power generation device 2 is smaller than the consumed power of the loading device 4, moreover, the power of the storage battery 3 is preferentially supplied to the DC power distribution system ESD. Consequently, it is possible to decrease the power to be supplied from the AC power system ESA, that is, an amount of power purchasing as greatly as possible. By utilizing the power generated from the photovoltaic power generation device 2 at a maximum, it is possible to contribute to $CO_2$ reduction.

When the $CO_2$ reduction mode is set, the operation control portion 10c sets the DC-AC starting voltage Vac_s, the charge starting voltage Vch_s, the discharge starting voltage Vdch_s, and the AC-DC starting voltage Vdc_s so as to have a relationship shown in the following Equation 1.

## [Equation 1]

$$\mathrm{Vac\_s > Vch\_s \geq Vdch\_s > Vdc\_s}$$

More specifically, for example, as shown in Fig. 5, the operation control portion 10c respectively sets the DC-AC starting voltage Vac_s, the charge starting voltage Vch_s and the discharge starting voltage Vdch_s, and the AC-DC starting voltage Vdc_s to 380 [V], 375 [V], and 370 [V], respectively. Moreover, the maximum discharging current value Idch_max of the bidirectional DC-DC converter 12 is set to 10 [A], and the constant voltage driving starting voltage Vpv_max is set to have a value greater than 380 [V] (for example, 400 [V]). In the present embodiment, the DC-AC starting voltage Vac_s is set to 380 [V]. For this reason, the voltage Vbus of the DC power distribution system ESD does not become higher than 380 [V] and does not exceed the constant voltage driving starting voltage Vpv_max. As a result, the DC-DC converter 11 always performs the MPPT control so that the photovoltaic power generation device 2 supplies maximum power to the DC power distribution system ESD. Although the description has been given to the case where the charge starting voltage Vch_s and the discharge starting voltage Vdch_s are set to have the same value in the present embodiment, the charge starting voltage Vch_s and the discharge starting voltage Vdch_s may have different values from each other. In this case, the bidirectional DC-DC converter 12 is set to a stopping state while the voltage Vbus of the DC power distribution system ESD is equal to or lower than the charge starting voltage Vch_s and equal to or higher than the discharge starting voltage Vdch_s.

In the case where the voltage Vbus of the DC power distribution system ESD is equal to or higher than 380 [V], the power generated from the photovoltaic power generation device 2 is very high and is sufficiently higher than the consumed power of the loading device 4. Therefore, an operation for charging the storage battery 3 through the bidirectional DC-DC converter 12 and the supply of power to the AC power system ESA through the DC-AC inverter 13a, that is, power selling are performed. At this time, the charging current value Ich is set to 15 [A].

When the voltage Vbus of the DC power distribution system ESD is dropped to be lower than 380 [V] by reduction in the power generated from the photovoltaic power generation device 2 or increase in the consumed power of the loading device 4, the DC-AC inverter 13a is stopped so that the power selling is ended. At this time, the charging current value Ich is reduced sequentially from the initial set value 15 [A] with decrease in the voltage Vbus.

When the voltage Vbus of the DC power distribution system ESD is further dropped to be lower than 375 [V], the bidirectional DC-DC converter 12 stops the charge to the storage battery 3 and discharges the power of the storage battery 3, thereby supplying the power to the DC power distribution system ESD. The voltage Vbus of the DC power distribution system ESD is maintained to the discharge starting voltage Vdch_s, that is, 375 [V] in this case, until the value of the discharging current reaches the maximum discharging current value Idch_max.

When the value of the discharging current reaches the maximum discharging current value Idch_max, the voltage Vbus of the DC power distribution system ESD is further dropped. When the voltage Vbus is lower than the AC-DC starting voltage Vdc_s, that is, 370 [V], the AC-DC converter 13b supplies power from the AC power system ESA to the DC power distribution system ESD. Then, the voltage Vbus of the DC power distribution system ESD is maintained to the AC-DC starting voltage Vdc_s until the amount of current of the AC-DC converter 13b reaches the maximum AC-DC current value Iad_max, that is, 10 [A] in this case. When the amount of current of the AC-DC converter 13b becomes larger than the maximum AC-DC current value Iad_max by the reduction in the power generated from the photovoltaic power generation device 2 or the increase in the consumed power of the loading device 4, the voltage Vbus of the DC power distribution system ESD further becomes lower than 370 [V].

<Economy Priority Mode>

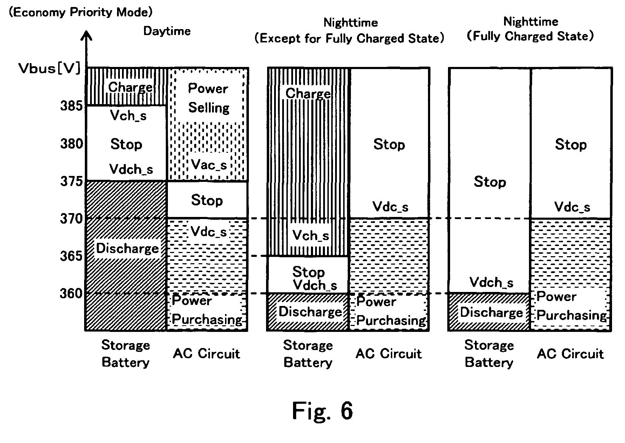

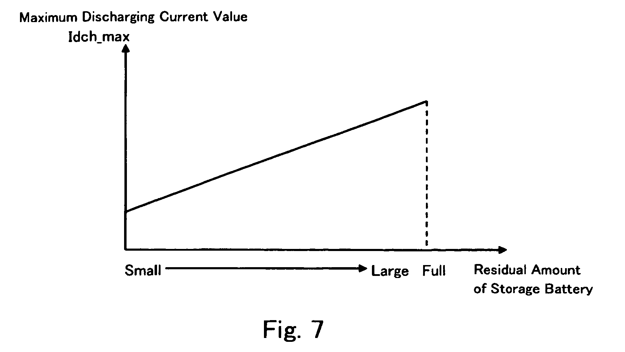

The economy priority mode will be described with reference to Figs. 6 and 7. In the economy priority mode, the bidirectional DC-DC converter 12 and the third power conversion device 13 are operated to decrease a cost of power consumption.

When the economy priority mode is set, the information collecting portion 10a acquires fee information about a power purchasing price and a power selling price of a commercial AC power supply which are set to each predetermined time zone (the second information collecting portion 10a). In the present embodiment, description will be given on the assumption of the case where the power selling price is separately set in daytime (for example, from 6 a.m. to 6 p.m.) and at nighttime (for example, from 6 p.m. to 6 a.m.), and the power selling price in the daytime is higher than the power selling price at nighttime. Furthermore, the information collecting portion 10a according to the present embodiment is configured to acquire information about whether the storage battery 3 is in a fully charged state and to then output the information to the operation control portion 10c.

In the present embodiment, in the case where the amount of power generated from the photovoltaic power generation device 2 is larger than the consumed power of the loading device 4 in a time zone in the daytime in which the power selling price is set high, the power selling is more economically advantageous than the charging of excess generated power into the storage battery 3. Accordingly, by giving priority to the power selling over the charge into the storage battery 3, it is possible to reduce the cost of the power consumption. Moreover, in the present embodiment, the power purchasing is more economically advantageous than discharging from the storage battery 3 in a time zone at nighttime in which the power selling price is set low. Therefore, priority is given to the power purchasing over the discharge from the storage battery 3, and the charge is performed unless the storage battery 3 is in the fully charged state.

As shown in the following Equation 2, the operation control portion 10c respectively sets the charge starting voltage Vch_s, the DC-AC starting voltage Vac_s, the discharge starting voltage Vdch_s and the AC-DC starting voltage Vdc_s in a time zone in the daytime in which the power selling price is set high while the economy priority mode is set.

$$[\text{Equation 2}]$$
$$Vch\_s > Vac\_s$$
$$Vdch\_s > Vdc\_s$$

Moreover, a time zone at nighttime in which the power selling price is set low and the power generated from the photovoltaic power generation device 2 becomes zero is divided into the case where a fully charged state is not obtained and the case where the fully charged state is obtained. The charge starting voltage Vch_s, the discharge starting voltage Vdch_s, the DC-AC starting voltage Vac_s, and the AC-DC starting voltage Vdc_s are respectively set as shown in the following Equation 3 in the case where the fully charged state is not obtained, and as shown in the following Equation 4 in the case where the fully charged state is obtained.

[Equation 3]

$$Vdch\_s \leq Vch\_s < Vdc\_s$$

[Equation 4]

$$Vdch\_s < Vdc\_s$$

More specifically, for example, as shown in Fig. 6, in the case of a time zone in the daytime, the operation control portion 10c respectively sets the charge starting voltage Vch_s, the DC-AC starting voltage Vac_s and the discharge starting voltage Vdch_s, and the AC-DC starting voltage Vdc_s to 385 [V], 375 [V], and 370 [V]. Consequently, in the case where the power generated from the photovoltaic power generation device 2 is large and is higher than the consumed power of the loading device 4 (the case where Vbus is equal to or higher than 375 [V]), excess generated power is supplied to the AC power system ESA so that the power selling is performed. In the case where the generated power further becomes excess (the case where Vbus is equal to or higher than 385 [V]), for example, the case where an amount of power selling is limited, the storage battery 3 is charged.

In the case where the consumed power of the loading device 4 is increased so that the generated power becomes lower than the consumed power of the loading device 4 (the case where Vbus is 370 to 375 [V]), the power of the storage battery 3 is first supplied to the DC power distribution system ESD. Furthermore, in the case where the voltage Vbus of the DC power distribution system ESD is reduced so that the value of the discharging current becomes greater than the maximum discharging current value Idch_max (corresponding to the case where Vbus is equal to or lower than 370 [V]), the power purchasing is performed. As shown in Fig. 7, the value of the maximum discharging current value Idch_max may be appropriately set depending on the amount of power stored in the storage battery 3. With such a structure, it is possible to prolong a time until the storage battery 3 becomes an empty state.

Moreover, in the case where the storage battery 3 is not in the fully charged state in a time zone at nighttime, the operation control portion 10c respectively sets the charge starting voltage Vch_s, the discharge starting voltage Vdch_s, and the AC-DC starting voltage Vdc_s to 365[V], 360[V], and 370[V]. In the time zone at nighttime, the power generated from the photovoltaic power generation device 2 is zero and the discharge starting voltage Vdch_s is set to 360 [V]. Therefore, the voltage Vbus of the DC power distribution system ESD is not actually raised to be higher than 370 [V] of the AC-DC starting voltage Vdc_s. Accordingly, even if the setting of the DC-AC starting voltage Vac_s is not changed from the setting of the time zone in the daytime (375 [V]), the AC-DC converter 13b is set to a stopping state in a region in which the voltage Vbus of the DC power distribution system ESD is equal to or higher than 370 [V].

Furthermore, in the case where the storage battery 3 is in the fully charged state in the time zone at nighttime, the operation control portion 10c respectively sets the discharge starting voltage Vdch_s and the AC-DC starting voltage Vdc_s to 360 [V] and 370 [V]. As described above, in the time zone at nighttime, the power generated from the photovoltaic power generation device 2 is zero, and the discharge starting voltage Vdch_s is set to 360 [V]. For this reason, actually, the voltage Vbus of the DC power distribution system ESD is not raised to be higher than 370 [V] of the AC-DC starting voltage Vdc_s. Accordingly, even if the setting of the charge starting voltage Vch_s is not changed from the setting of the time zone in the daytime (385 [V]), the bidirectional DC-DC converter 12 is set to a stopping state in a region in which the voltage Vbus of the DC power distribution system ESD is equal to or higher than 370 [V]. Similarly, even if the setting of the DC-AC starting voltage Vac_s is not changed from the setting of the time zone in the daytime (375 [V]), the AC-DC converter 13b is set to the stopping state in a region in which the voltage Vbus of the DC power distribution system ESD is equal to or higher than 370 [V].

<Flattening Mode>

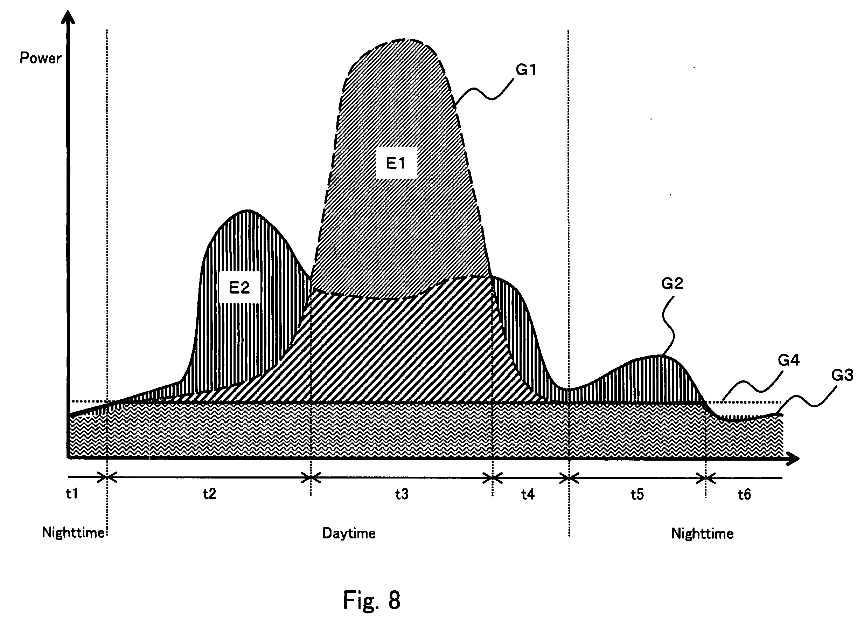

The leveling mode will be described with reference to Fig. 8. In the leveling mode, an operation is performed so as to level power supplied from the AC power system ESA to the DC power distribution system ESD as much as possible. By controlling a peak of power supplied from the AC power system ESA, that is, a peak of power for power purchasing, it is expected to control the peak of generated power in a power company. Furthermore, in some cases in which a power purchasing contract is made with the power company in multifamily housing, for example, a condominium, a unit price of the power purchasing is increased when the peak value of power for power purchasing is made greater. In these cases, it is possible to reduce a power purchasing fee by suppressing the peak value of the power for power purchasing.

When the leveling mode is set, the information collecting portion 10a acquires an actual value of the consumed power of the loading device 4 and an actual value of the amount of power generated from the photovoltaic power generation device 2 (the third information collecting portion 10a). More specifically, in the present embodiment, the information collecting portion 10a records a value of a current flowing through the loading device 4 and the voltage Vbus of the DC power distribution system, and the output current Ipv and the output voltage Vpv of the photovoltaic power generation device 2 per hour. The actual value of the consumed power of the loading device 4 is obtained by a sum of a current flowing through the loading device multiplied by the voltage Vbus of the DC power distribution system per unit time (per hour in the present embodiment), and the actual value of the amount of power generated from the photovoltaic power generation device is obtained by a sum of the output current Ipv multiplied by the output voltage Vpv per unit time. Fig. 8 shows an example of the actual value of the consumed power of the loading device 4 and the actual value of the amount of power generated from the photovoltaic power generation device 2, and a broken line G1 indicates a transition of the actual value of the amount of power generated from the photovoltaic power generation device 2, a solid line G2 indicates a transition of the actual value of the consumed power of the loading device 4, a solid line G3 indicates a transition of the power for power purchasing, and a dotted line G4 indicates a maximum value of the power for power purchasing.

When the leveling mode is set, the operation control portion 10c determines a maximum value of the power for power purchasing depending on the actual value of the consumed power of the loading device 4 and the actual value of the amount of power generated from the photovoltaic power generation device 2 which are acquired by the information collecting portion 10a, and sets a maximum AC-DC current value Iad_max depending on the maximum value of the power for power purchasing which is thus determined. More specifically, expected power for power purchasing which is required per day is obtained from the actual value of the consumed power of the loading device 4 and the actual value of the amount of power generated from the photovoltaic power generation device 2 per day which are acquired by the information collecting portion 10a, a value having room for a value obtained by dividing the expected power for power purchasing per day by hour (24) is set to a maximum value of the power for power purchasing (see the dotted line G4 in Fig. 8), and the maximum AC-DC current value Iad_max is obtained from the maximum value of the power for power purchasing.

In the present embodiment, the charge starting voltage Vch_s and the discharge starting voltage Vdch_s are set in the same manner as the $CO_2$ reduction mode, and both of them are set to 375 [V]. Moreover, the AC-DC starting voltage Vdc_s and the charge starting voltage Vch_s are set to, for example, 400 [V], because the power purchasing is always performed in the present embodiment.

More specifically, in a time zone at nighttime in which the power generated from the photovoltaic power generation device 2 is zero, the current value of the DC power distribution system ESD becomes smaller than the maximum AC-DC current value Iad_max if the consumed power of the loading device 4 is lower than a maximum value G4 of the power for power purchasing (the case of time zones t1 and t6 in Fig. 8). Accordingly, power is supplied from the AC power system ESA to the DC power distribution system ESD so that the operation of the bidirectional DC-DC converter 12 is stopped. When the consumed power of the loading device 4 is increased so that the power for power purchasing is increased and the current value of the AC-DC converter 13b reaches the maximum AC-DC current value Iad_max (the case of a time zone t5 in Fig. 8), the AC-DC converter 13b is operated such that the current value does not exceed the maximum AC-DC current value Iad_max. In this case, when the voltage Vbus of the DC power distribution system ESD is reduced to reach the discharge starting voltage Vdch_s, the bidirectional DC-DC converter 12 performs a discharging operation.

Moreover, in the case where the consumed power of the loading device 4 is greater than a total of the power generated from the photovoltaic power generation device 2 and the maximum value G4 of the power for power purchasing in the time zone in the daytime (the case of time zones t2 and t4 in Fig. 8), the bidirectional DC-DC converter 12 performs a discharging operation if the voltage Vbus of the DC power distribution system ESD is reduced (becomes equal to or lower than 375 [V], for example). In the case where the power generated from the photovoltaic power generation device 2 is increased so that the total of the generated power and the maximum value G4 of the power for power purchasing is greater than the consumed power of the loading device 4 (the case of the time zone t1 in Fig. 8), the bidirectional DC-DC converter 12 performs a charging operation if the voltage Vbus of the DC power distribution system ESD is raised (becomes equal to or higher than 375 [V], for example). In Fig. 8, a slant line portion E1 indicates an amount of power to be charged to the storage battery 3 and a vertical line portion E2 indicates an amount of power to be discharged from the storage battery 3. In the case where the consumed power of the loading device 4 is lower than the maximum value G4 of the power for power purchasing in the time zone in the daytime (not shown), the current value of the DC power distribution system ESD is smaller than the maximum AC-DC current value Iad_max so that power is supplied from the AC power system ESA to the DC power distribution system ESD, and the bidirectional DC-DC converter 12 stops the operation.

<Storage Battery Deterioration Relieving Mode>

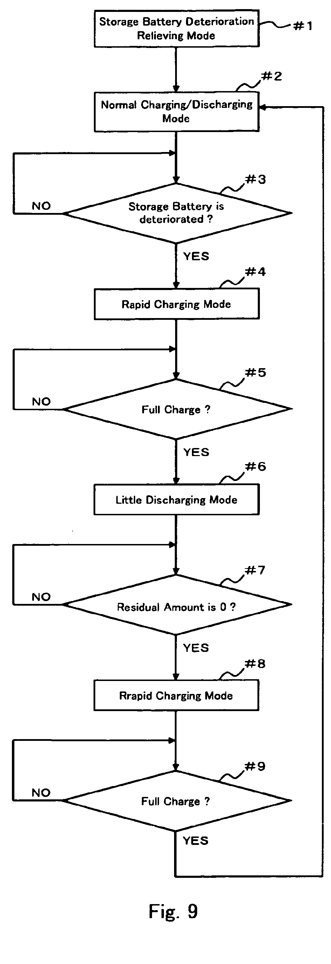

The storage battery deterioration relieving mode will be described with reference to Fig. 9. In the storage battery deterioration relieving mode, an operation is performed to prolong a lifetime of the storage battery 3.

In the storage battery deterioration relieving mode according to the present embodiment, as an internal operation mode to be set to the operation control portion 11c by the operation mode setting portion 11b, a rapid charging mode for charging the storage battery 3 more rapidly than usual, a normal charging/discharging mode which is preset by the operation mode setting portion 10b and a little discharging mode for discharging the storage battery 3 more slowly than usual are set. Each of set values in the normal charging/discharging mode according to the present embodiment may be equal to each of set values in the $CO_2$ reduction mode, the economy priority mode, the leveling mode, and the like.

For the storage battery 3 according to the present embodiment, the lithium ion battery is assumed as described above. When the lithium ion battery is alternately subjected to a rapid discharge and a rapid charge repetitively, an internal resistance is gradually increased so that an output deterioration phenomenon occurs. Furthermore, a concentration of a lithium ion in an electrolyte held between a positive plate and a negative plate in a power generation element may fluctuate with the output deterioration phenomenon of a secondary battery. If the concentration of the lithium ion in the held electrolyte fluctuates, the internal resistance of the lithium ion battery may increase. When it is determined that deterioration in the lithium ion battery is great, it is preferable that the charging and discharging conditions of the storage battery 3 be regulated appropriately to repeat the charge/discharge. Consequently, it is possible to suppress an increase in the internal resistance, thereby suppressing a deterioration to maintain the lifetime of the storage battery 3 to be longer. In the present embodiment, in order to suppress the increase in the internal resistance of the storage battery 3 and thereby suppressing the deterioration, when it is determined that the storage battery 3 is deteriorated, the rapid charging mode for performing charge more rapidly than usual is executed, and when the charge is ended, the little discharging mode for performing discharge more slowly than usual is executed, and when the discharge is ended, the rapid charging mode is executed.

The information collecting portion 10a according to the present embodiment successively acquires deterioration information about a power storage device when the storage battery deterioration relieving mode is set (the fourth information collecting portion 10a). More specifically, the information collecting portion 10a according to the present embodiment acquires information about a concentration of a lithium ion of a lithium ion battery and a measured value of an internal resistance.

The operation mode setting portion 10b determines whether the power storage device is deteriorated or not based on the deterioration information while the storage battery deterioration relieving mode is set by an external input, and when determining that the power storage device is deteriorated, the operation mode setting portion 10b sets the rapid charging mode to the operation control portion 10c, sets the little discharging mode to the operation control portion 10c when the power storage device is fully charged, sets the rapid charging mode to the operation control portion 10c when the discharge of the power storage device is ended, and sets the normal charging/discharging mode to the operation control portion 10c when the power storage device is fully charged.

When the rapid charging mode is set, the operation control portion 10c sets the charging current value Ich to be greater than the charging current value Ich in the normal charging/discharging mode depending on the characteristic of the power storage device, and when the little discharging mode is set, the operation control portion 10c sets the maximum discharging current value Idch_max to be smaller than the maximum discharging current value Idch_max in the normal charging/discharging mode depending on the characteristic of the power storage device.

Fig. 9 shows an operation in the case where the storage battery deterioration relieving mode is set. If the storage battery deterioration relieving mode is set through the display device 5 shown in Fig. 1 (Step #1), the operation mode setting portion 10b first sets the normal charging/discharging mode to the operation control portion 10c (Step #2). The operation control portion 10c sets each of a first control parameter and a second control parameter depending on the normal charging/discharging mode.

Subsequently, the operation mode setting portion 10b determines whether the storage battery 3 is deteriorated or not based on the deterioration information (Step #3), and sets the rapid charging mode to the operation control portion 10c when determining that the storage battery 3 is deteriorated (a branch of YES in Step #3) (Step #4). When the rapid charging mode is set, the operation control portion 10c sets the charging current value Ich to be greater than the charging current value Ich in the normal charging/discharging mode. Next, the operation mode setting portion 10b sets the little discharging mode to the operation control portion 10c (Step #6) when the storage battery 3 is fully charged (a branch of YES in Step #5). When the little discharging mode is set, the operation control portion 10c sets the maximum discharging current value Idch_max to be smaller than the maximum discharging current value Idch_max in the normal charging/discharging mode. Subsequently, when a residual amount of the storage battery 3 is zero (a branch of YES in Step #7), the operation mode setting portion 10b sets the rapid charging mode to the operation control portion 10c again (Step #8). In Step #4, the operation control portion 10c sets the charging current value Ich to be greater than the charging current value Ich in the normal charging/discharging mode. Therefore, the setting of the charging current value Ich is not changed.

Subsequently, when the storage battery 3 is fully charged (a branch of YES in Step #9), the operation mode setting portion 10b sets the normal charging/discharging mode to the operation control portion 10c (Step #2). When the normal charging/discharging mode is set, the operation control portion 10c sets the charging current value Ich and the maximum discharging current value Idch_max to the normal charging/discharging mode.

<External Command Mode>

In the external command mode, each of set values of the first control parameter and the second control parameter is acquired from the outside. With such a structure, for example, it is possible to optionally add the external operation mode.

<Second Embodiment>

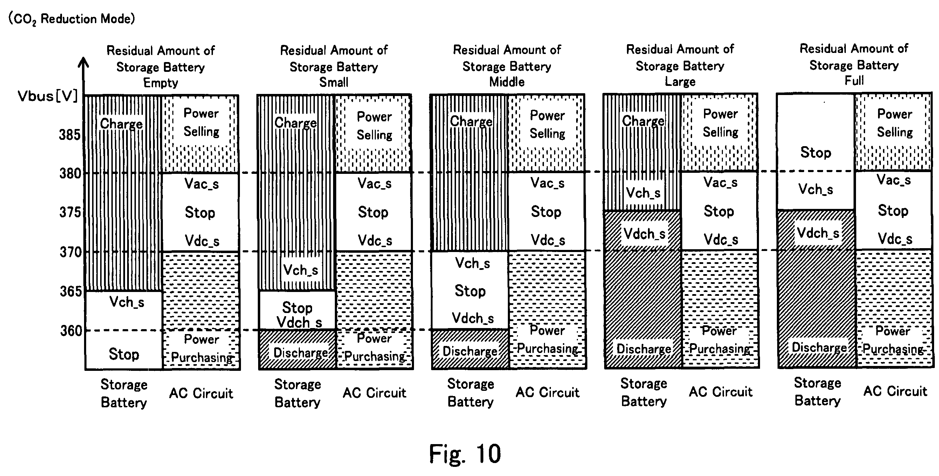

A second embodiment of the control system 1 according to the present invention will be described with reference to Fig. 10. Although the first control parameter is fixedly set in the $CO_2$ reduction mode according to the first embodiment, a first control parameter is set to be switched depending on a residual amount of a storage battery 3 (corresponding to a second driving mode) in a $CO_2$ reduction mode according to the present embodiment. Herein, a discharge starting voltage Vdch_s and a charge starting voltage Vch_s which are the first control parameters are set so that the larger the residual amount of the storage battery 3 is, the larger the discharge starting voltage Vdch_s and the charge starting voltage Vch_s are.

While the $CO_2$ reduction mode is set, an information collecting portion 10a according to the present embodiment appropriately acquires an amount of power stored in a power storage device from a second power conversion device at a certain interval of 10 to 60 minutes or the like, for example (the first information collecting portion 10a).

While the second driving mode is set, an operation control portion 10c according to the present embodiment appropriately sets the charge starting voltage Vch_s and the discharge starting voltage Vdch_s depending on an amount of stored power. Fig. 10 shows a voltage setting method in the $CO_2$ reduction mode according to the present embodiment.

In the present embodiment, as shown in Fig. 10, description will be given on the assumption of the case where the first control parameter is switched depending on the residual amount of the storage battery 3 which is classified into the following five cases: "empty" of 10% or less, "small" of 10% to 30%, "middle" of 30% to 70%, "large" of 70% to 90%, and "full" of 90% or more.

As for the first control parameter, the discharge starting voltage Vdch_s is set to 0 [V] in the case where the residual amount of the storage battery 3 is "empty", to 360 [V] in the case of "small" or "middle", and to 375 [V] in the case of "large" or "full", respectively. The charge starting voltage Vch_s is set to 365 [V] in the case where the residual amount of the storage battery 3 is "empty" or "small", to 370[V] in the case of "middle", to 375 [V] in the case of "large", and to 400 [V] in the case of "full", respectively. Moreover, a maximum discharging current value Idch_max of a bidirectional DC-DC converter 12 is set to 10 [A].

Moreover, as for the second control parameter, a DC-AC starting voltage Vac_s, a AC-DC starting voltage Vdc_s, and a maximum AC-DC current value Iad_max of an AC-DC converter 13b are to 380 [V], 370 [V], and 10[A], respectively.

By performing the setting as described above, in the case where the residual amount of the storage battery 3 is "full", the residual amount of the storage battery 3 is very large and the storage battery 3 does not need to be charged as shown in Fig. 10. For this reason, a charging operation of the bidirectional DC-DC converter 12 is not performed, but a discharging operation is performed with priority over power purchasing.

Moreover, in the case where the residual amount of the storage battery 3 is "large", as shown in Figs. 5 and 10, the first control parameter and the second control parameter are set in the same manner as the setting of the first control parameter and the second control parameter in the $CO_2$ reduction mode according to the first embodiment. Similarly to the case of "full", the discharging operation is performed with priority over the power purchasing. However, in the case where power generated from a photovoltaic power generation device 2 is larger than consumed power of a loading device 4 (the case where the voltage Vbus of the DC power distribution system ESD is higher than the charge starting voltage Vch_s), a charging operation is performed.

In the case where the residual amount of the storage battery 3 is "middle", the charge starting voltage Vch_s and the discharge starting voltage Vdch_s are set to be lower than that in the case of "large" as shown in Fig. 10. In the case where the power generated from the photovoltaic power generation device 2 is lower than the consumed power of the loading device 4 (the case where the voltage Vbus of the DC power distribution system ESD is lower than the AC-DC starting voltage Vdc_s), the power purchasing is performed with priority over the discharging operation.

In the case where the residual amount of the storage battery 3 is "small", in order to prevent the residual amount of the storage battery 3 from being insufficient, the power obtained by the power purchasing is charged into the storage battery 3 when the voltage Vbus of the DC power distribution system ESD is higher than the charge starting voltage Vch_s and is lower than the AC-DC starting voltage Vdc_s. In the case where the consumed power of the loading device 4 is high and the voltage Vbus of the DC power distribution system ESD is lower than the discharge starting voltage Vdch_s, the discharging operation is performed.

In the case where the residual amount of the storage battery 3 is "empty", similarly to the case where the residual amount of the storage battery 3 is "small", the power obtained by the power purchasing is charged into the storage battery 3 when the voltage Vbus of the DC power distribution system ESD is higher than the charge starting voltage Vch_s and is lower than the AC-DC starting voltage Vdc_s. Moreover, the discharging operation is not performed.

By switching the setting of the first control parameter depending on the residual amount of the storage battery 3, it is possible to prevent the residual amount of the storage battery 3 from being insufficient even in the case where the amount of power generated from the photovoltaic power generation device 2 is small or the case where the amount of consumed power of the loading device 4 is large.

<Third Embodiment>

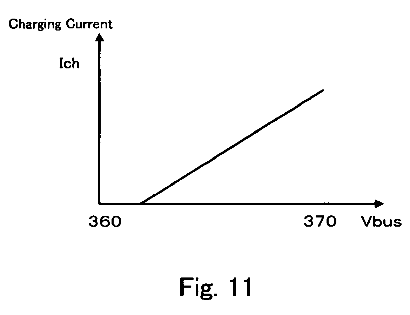

A third embodiment of the control system 1 according to the present invention will be described with reference to Fig. 11. Although there is assumed the case where a power selling price is varied between a time zone in daytime and a time zone at nighttime in the economy priority mode according to the first embodiment, the description will further be given on the assumption of the case where a power purchasing price is increased when a certain amount of power or more is purchased in a time zone at nighttime in the present embodiment.

In an economy priority mode according to the present embodiment, there is performed a control for reducing an amount of power to be supplied from an AC power system ESA to a DC power distribution system ESD to a certain amount or less in a time zone at nighttime.

More specifically, an operation control portion 10c according to the present embodiment sets a maximum AC-DC current value Iad_max depending on an amount of power for which a power purchasing price is increased. In the case of the present embodiment, supply of power from the AC power system ESA to the DC power distribution system ESD is limited. For this reason, when consumed power of a loading device 4 is increased so that a current value of an AC-DC converter 13b reaches the maximum AC-DC current value Iad_max, a voltage Vbus of the DC power distribution system ESD is reduced. Accordingly, as shown in Fig. 11, the operation control portion 10c according to the present embodiment sets a charging current Ich to be decreased depending on a reduction in the voltage Vbus of the DC power distribution system ESD. Consequently, it is possible to stabilize the voltage Vbus of the DC power distribution system ESD.

<Fourth Embodiment>

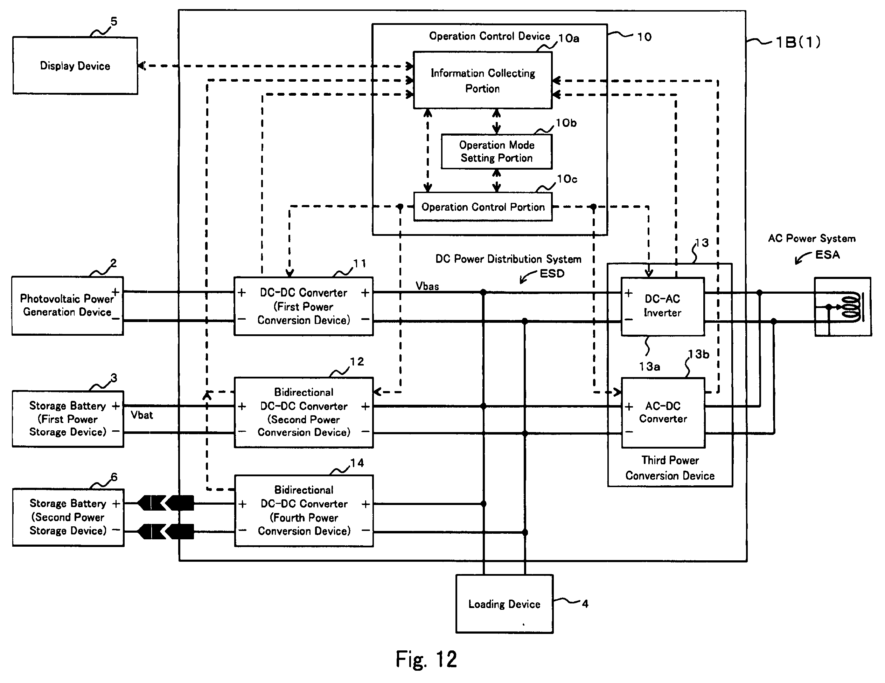

A fourth embodiment of the control system 1 according to the present invention will be described with reference to Fig. 12.

As shown in Fig. 12, a control system 1B according to the present invention in the present embodiment includes, in addition to each of the structures according to the first embodiment, a fourth power conversion device 14 for performing voltage conversion between a second power storage device configured to freely carry out connection and disconnection to and from a DC power distribution system ESD and the DC power distribution system ESD, thereby supplying power from one side to the other side.

A storage battery 6 is one example of the second power storage device in the present embodiment, and is assumed to be a storage battery which is to be mounted on an electric vehicle or a hybrid car. Although description will be given on the assumption that the storage battery 6 according to the present embodiment is a lithium ion battery, other batteries may be employed. The storage battery 6 is configured to be connected to the fourth power conversion device 14 which is provided fixedly in the DC power distribution system ESD through a connector.

The bidirectional DC-DC converter 14 is one example of the fourth power conversion device in the present embodiment, and similarly to the bidirectional DC-DC converter 12, the bidirectional DC-DC converter 14 is configured to control a direction, a start, and a stop of power supply depending on a charge starting voltage Vch_s, a discharge starting voltage Vdch_s, a charging current value Ich, a charging voltage value Vch, a discharging voltage value Vdch, and a maximum discharging current value Idch_max.

When the storage battery 6 is disconnected or connected, an information collecting portion 10a according to the present embodiment is configured to acquire connection information indicative of disconnection or connection from or to the storage battery 6 disconnected or connected. Moreover, the information collecting portion 10a according to the present embodiment acquires information about a whole capacity of storage batteries which are connected and a residual amount of each of the storage batteries.

An operation control portion 10c according to the present embodiment acquires the connection information about the storage battery 6 from the information collecting portion 10a, operates the bidirectional DC-DC converter 14 corresponding to the storage battery 6 which is connected in the case where the storage battery 6 is connected, and sets the charge starting voltage Vch_s, the discharge starting voltage Vdch_s, the charging current value Ich, the charging voltage value Vch, the discharging voltage value Vdch and the maximum discharging current value Idch_max. Moreover, in the case where the storage battery 6 is disconnected, the bidirectional DC-DC converter 14 corresponding to the disconnected storage battery 6 is stopped.

In the present embodiment, the storage battery 6 is assumed to be an on-vehicle storage battery. Therefore, it is also possible to employ such a structure as to charge the storage battery 6 with priority over the other storage battery 3 which is connected fixedly. More specifically, the operation control portion 10c sets the charge starting voltage Vch_s of the storage battery 6 to have a smaller value than the charge starting voltage Vch_s of the storage battery 3.

In the present embodiment, it is possible to utilize the storage battery 6 configured to be freely connected or disconnected. Therefore, the present embodiment can be applied to the case of a power failure or the case where consumed power of a loading device is temporarily increased and power purchasing is to be suppressed or the like, for example.

<Other Embodiments>

Description will be given to other embodiments of the control system 1 according to the present invention.

(1) In the economy priority mode according to the first embodiment, the information collecting portion 10a may be configured to acquire information about a weather forecast and may be controlled to predict an amount of power generated on the next day, thereby regulating a charging amount and a discharging amount of the storage battery 3. For example, in the case where it is predicted that it will be cloudy and the amount of power generation will be small on the next day, the charge starting voltage Vch_s and the discharge starting voltage Vdch_s may be set to be low such that the residual amount of the storage battery 3 is increased.

(2) In the leveling mode according to the first embodiment, in the case where an amount of power for power selling is limited by a power company, it is also possible to employ such a structure that the information collecting portion 10a acquires a maximum value of an amount of purchase of the power, and the operation control portion 10c sets the maximum AC-DC current value Iad_max depending on the maximum value of the amount of purchase of the power.

(3) Although the description has been given on the assumption of the case where the first power storage device 3 is configured by one storage battery 3 for simplicity in the first to fourth embodiments, the first power storage device 3 may be configured by connecting a plurality of storage batteries in parallel.

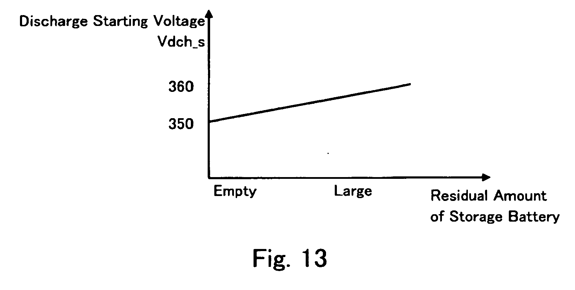

In the case where the first power storage device 3 is configured by connecting the plurality of storage batteries in parallel, the information collecting portion 10a acquires an appropriate residual amount for every storage battery, and as shown in Fig. 13, the operation control portion 10c appropriately switches the setting of the discharge starting voltage Vdch_s depending on the residual amount of the storage battery 3 which is acquired by the information collecting portion 10a.

With such a structure, the discharging operation is preferentially started from the storage battery 3 having a larger amount. If only a part of the storage batteries 3 repeats charging/discharging, only the part of the storage batteries 3 is deteriorated. In the present embodiment, however, the discharging operation is preferentially started from the storage battery 3 having a larger residual amount. As a result, therefore, the residual amounts of the plurality of storage batteries 3 are made uniform so that it is possible to prevent only a part of the storage batteries 3 from being charged/discharged and thus deteriorated.

(4) Although the description has been given to the case where each of the power conversion devices controls the direction, the start, and the stop of power supply in the first to fourth embodiments, the present invention is not limited thereto. It is also possible to employ such a structure that the operation control portion 10c controls the direction, the start, and the stop of power supply of each of the power conversion devices.

(5) Although there is employed the structure in which the $CO_2$ reduction mode, the economy priority mode, the leveling mode, and the storage battery deterioration relieving mode are separately set respectively in the first to fourth embodiments, the present invention is not limited thereto. For example, it is also possible to employ a structure in which the storage battery deterioration relieving mode is not selected by a user but is always set, any of the $CO_2$ reduction mode, the economy priority mode, the leveling mode, and the external command mode is executed as the normal charging/discharging mode of the storage battery deterioration relieving mode, and an operation mode to be executed in the normal charging/discharging mode is selected through the display device 5 by a user.

Moreover, it is also possible to employ such a structure that the storage battery deterioration relieving mode is not selected by a user but is always set, and when it is determined that the storage battery 3 is deteriorated, the setting of the charging current value Ich in the charging operation is made to be the same as the setting of the charging current value Ich in the rapid charging mode, and the setting of the maximum discharging current value Idch_max in the discharging operation is made to be the same as the setting of the maximum discharging current value Idch_max in the little discharging mode to execute the external operation mode set by the user (the $CO_2$ reduction mode, the economy priority mode, the leveling mode, and the external command mode).

(6) Although there is employed the structure in which the storage battery deterioration relieving mode is executed for the first power storage device in the first to fourth embodiments, it is also possible to employ such a structure that the storage battery deterioration relieving mode is similarly executed for the second power storage device.

(7) In the first to fourth embodiments, it is supposed that the control system 1 according to the present invention cannot be operated normally with the normal setting of the external operation mode when an abnormal situation such as a power failure or an electric supply limitation occurs. More specifically, when the power failure occurs, for example, the AC-DC converter 13b is stopped so that the setting of the AC-DC starting voltage Vdc_s becomes invalid. Accordingly, it is also possible to employ a structure in which tables recording information for regulating the first control parameter and the second control parameter depending on the abnormal situation are prepared in advance, and if an abnormal situation occurs, the first control parameter and the second control parameter are regulated by using any of the tables which corresponds to the abnormal situation that has occurred.

EXPLANATION OF REFERENCES

1 Control system for DC power distribution according to the present invention
1A Control system for DC power distribution according to the present invention
1B Control system for DC power distribution according to the present invention
2 Photovoltaic Power Generation Device
3 Storage Battery (First Power Storage Device)
4 Loading Device
5 Display Device
6 Storage Battery (Second Power Storage Device)
10 Operation Control Device
10a Information Collecting Portion
10b Operation Mode Setting Portion
10c Operation Control Portion
11 DC-DC Converter (First Power Conversion Device)
12 Bidirectional DC-DC Converter (Second Power Conversion Device)
13 Third Power Conversion Device
13a DC-AC Inverter
13b AC-DC Converter
14 Bidirectional DC-DC Converter (Fourth Power Conversion Device)
100 Control system for DC power distribution according to the prior art
101 System Interconnection Unit
102 Power Storage Unit
103 Flywheel Unit
104 Wind Power Generation Unit
105 Photovoltaic Power Generation Unit
106 Loading Unit
ESD DC power distribution system
ESA AC power system

**Claims**

1. A control system for DC power distribution (1) comprising:

a DC power distribution system (ESD) for supplying DC power to a loading device (4);
a first power conversion device (11) for performing voltage conversion over power generated from a photovoltaic power generation device (2), thereby supplying the converted power to the DC power distribution system (ESD);
a second power conversion device (12) for performing voltage conversion between a first power storage device (3) which is always connected to the DC power distribution system (ESD) and the DC power distribution system (ESD), thereby supplying power from one side to the other side;
a third power conversion device (13) for performing power conversion between an AC power system (ESA) and the DC power distribution system (ESD), thereby supplying power from one side to the other side, **characterized in that** the control system further comprises:

an operation mode setting portion (10b) for setting an operation mode of the control system for DC power distribution (1) depending on operation mode determination information for setting the operation mode; and
an operation control portion (10c) for setting a first control parameter and a second control parameter depending on the operation mode set by the operation mode setting portion (10b),
the second power conversion device (12) or the operation control portion (10c) control a direction, a start, and a stop of power supply of the second power conversation device (12) depending on a voltage of the DC power distribution system (ESD) and the first control parameter,
the third power conversion device (13) or the operation control portion (10c) control a direction, a start, and a stop of power supply of the third power conversation device (13) depending on the voltage of the DC power distribution system (ESD) and the second control parameter,
the first control parameter includes a charge starting voltage for defining the voltage of the DC power distribution system (ESD) at which power starts to be supplied from the DC power distribution system (ESD) to the first power storage device (3), and a discharge starting voltage for defining the voltage of the DC power distribution system (ESD) at which power starts to be supplied from the first power storage device (3) to the DC power distribution system (ESD), the second control parameter includes a DC-AC starting voltage for defining the voltage of the DC power distribution system (ESD) at which power starts to be supplied from the DC power distribution system (ESD) to the AC power system (ESA), and a AC-DC starting voltage for defining the voltage of the DC power distribution system (ESD) at which power starts to be supplied from the AC power system (ESA) to the DC power distribution system (ESD), the operation mode includes a first driving mode for reducing an amount of power to be supplied from the AC power system (ESA) to the DC power distribution system (ESD), and the operation control portion (10c) is capable of setting the first control parameter and the second control parameter such that the DC-AC starting voltage is higher than the charge starting voltage, the discharge starting voltage is higher than the AC-DC starting voltage, and the charge starting voltage is equal to or differs from the discharge starting voltage when the first driving mode is set.

2. The control system for DC power distribution (1) according to claim 1, further comprising an information collecting portion (10a) for acquiring parameter setting information for setting the first control parameter and the second control parameter, wherein the operation control portion (10c) sets the first control parameter and the second control parameter based on the parameter setting information acquired by the information collecting portion (10a) when the operation mode is changed by the operation mode setting portion (10b).

3. The control system for DC power distribution (1) according to any one of claims 1 or 2, wherein the operation mode includes a second driving mode for switching the setting of the first control parameter depending on an amount of power stored in the first power storage device (3), the control system includes a first information collecting portion (10a) for appropriately acquiring the amount of power stored in the first power storage device (3) from the second power conversion device (12) while the second driving mode is set, and

the operation control portion (10c) sets the charge starting voltage and the discharge starting voltage so that the larger the amount of the stored power is, the higher the charge starting voltage and the discharge starting voltage become while the second driving mode is set.

4. The control system for DC power distribution (1) according to any one of claims 1 to 3, wherein the AC power system (ESA) is connected to a commercial AC power supply, the operation mode includes a third driving mode for controlling a power fee, the control system includes a second information collecting portion (10a) for acquiring fee information about a power purchasing price and a power selling price of the commercial AC power supply which are set for each predetermined time zone when the third driving mode is set, and the operation control portion (10c)

sets the charge starting voltage to be higher than the DC-AC starting voltage and sets the discharge starting voltage to be higher than the AC-DC starting voltage in a time zone in which the power selling price is set high while the third driving mode is set, and sets the charge starting voltage to be lower than the AC-DC starting voltage in a time zone in which the power selling price is set low while the third driving mode is set.

5. The control system for DC power distribution (1) according to claim 4, wherein the first control parameter includes a charging current value in a case where power is supplied from the DC power distribution system (ESD) to the first power storage device (3), and the operation control portion (10c) sets the charging current value to be decreased depending on a drop in the voltage of the DC power distribution system (ESD).

6. The control system for DC power distribution (1) according to any one of claims 1 to 5, wherein the second control parameter includes a maximum AC-DC current value of a current to be supplied from the AC power system (ESA) to the DC power distribution system (ESD) in the third power conversion device (13).

7. The control system for DC power distribution (1) according to claim 6, wherein the operation mode includes a fourth driving mode for leveling power to be supplied from the AC power system (ESA) to the DC power distribution system (ESD),

the control system includes a third information collecting portion (10a) for acquiring an actual value of consumed power of the loading device (4) and an actual value of an amount of power generated from the photovoltaic power generation device (2) when the fourth driving mode is set, and
the operation control portion (10c) sets the maximum AC-DC current value depending on the actual value of the consumed power and the actual value of the amount of the generated power when the fourth driving mode is set.

8. The control system for DC power distribution (1) according to any one of claims 1 to 7, wherein
the first control parameter includes a charging current value in a case where power is supplied from the DC power distribution system (ESD) to the first power storage device (3), and a maximum discharging current value in a case where power is supplied from the first power storage device (3) to the DC power distribution system (ESD).

9. The control system for DC power distribution (1) according to claim 8,
wherein
the operation mode includes a rapid charging mode for charging the first power storage device (3) more rapidly than usual, a normal charging/discharging mode which is preset by the operation mode setting portion (10b), and a little discharging mode for discharging the first power storage device (3) more slowly than usual,
the control system includes a fourth information collecting portion (10a) for acquiring deterioration information about the first power storage device (3),
the operation mode setting portion (10b) determines whether the first power storage device (3) is deteriorated or not based on the deterioration information, when determining that the first power storage device (3) is deteriorated, the operation mode setting portion (10b) sets the operation mode to the rapid charging mode, sets the operation mode to the little discharging mode when the first power storage device (3) is fully charged, sets the operation mode to the rapid charging mode when the discharge of the first power storage device (3) is ended, and sets the operation mode to the normal charging/discharging mode when the first power storage device (3) is fully charged, and
the operation control portion (10c) sets the charging current value to be greater than the charging current value in the normal charging/discharging mode depending on a characteristic of the first power storage device (3) when the rapid charging mode is set, and sets the maximum discharging current value to be smaller than the maximum discharging current value in the normal charging/discharging mode depending on the characteristic of the first power storage device (3) when the little discharging mode is set.

10. The control system for DC power distribution (1) according to any one of claims 1 to 9, wherein
the operation control portion (10c) sets a third control parameter to the first power conversion device (11), and
the first power conversion device (11) performs either of a normal operation for performing an operation such that output power is maximized, or a constant voltage operation for performing an operation such that an output voltage value is constant, depending on the voltage of the DC power distribution system (ESD) and the third control parameter.

11. The control system for DC power distribution (1) according to claim 10, wherein the third control parameter includes a constant voltage driving starting voltage for defining the voltage of the DC power distribution system (ESD) at which the constant voltage operation is started.

12. The control system for DC power distribution (1) according to any one of claims 1 to 11, further comprising a fourth power conversion device (14) for performing voltage conversion between a second power storage device (6) and the DC power distribution system (ESD), thereby supplying power from one side to the other side, the second power storage device (6) being configured to freely perform connection and disconnection to and from the DC power distribution system (ESD).

**Patentansprüche**

1. Steuerungssystem für eine Gleichstrom-Stromverteilung (1), das aufweist:

ein Gleichstrom-Stromverteilungssystem (ESD) zum Zuführen von Gleichstrom zu einem Ladegerät (4);
ein erstes Stromrichtergerät (11) zum Ausführen einer Spannungsumwandlung durch Strom, der von einem Photovoltaik-Stromerzeugungsgerät (2) erzeugt wird, wodurch der umgewandelte Strom dem Gleichstrom-Stromverteilungssystem (ESD) zugeführt wird;
ein zweites Stromrichtergerät (12) zum Ausführen einer Spannungsumwandlung zwischen einer ersten Stromspeichereinheit (3), die immer mit dem Gleichstrom-Stromverteilungssystem (ESD) verbunden ist, und dem Gleichstrom-Stromverteilungssystem (ESD), wodurch Strom von einer Seite zur anderen Seite zugeführt wird,
ein drittes Stomrichtergerät (13) zum Ausführen einer Spannungsumwandlung zwischen einem Wechselstrom-Stromversorgungssystem (ESA) und dem Gleichstrom-Stromverteilungssystem (ESD), wodurch Strom von einer Seite zur anderen Seite zugeführt wird, **dadurch gekennzeichnet, dass** das Steuerungssystem des Weiteren aufweist:

einen Betriebsmoduseinstellungsabschnitt (10b) zum Einstellen eines Betriebsmodus des Steuerungssystems für eine Gleichstrom-Stromverteilung (1), und zwar abhängig von einer Betriebsmodusbestimmungsinformation zum Einstellen des Betriebmodus; und

einen Betriebssteuerungsabschnitt (10c) zum Einstellen eines ersten Steuerungsparameters und eines zweiten Steuerungsparameters, und zwar abhängig von dem durch den Betriebsmoduseinstellungsabschnitt (10b) eingestellten Betriebsmodus, wobei das zweite Stromrichtergerät (12) oder der Betriebssteuerungsabschnitt (10c) eine Richtung, einen Anfang und ein Ende der Stromzufuhr des zweiten Stromrichtergeräts (12) steuert, und zwar abhängig von einer Spannung des Gleichstrom-Stromverteilungssystems (ESD) und dem ersten Steuerungsparameter, wobei das dritte Stromrichtergerät (13) oder der Betriebsteuerungsabschnitt (10c) eine Richtung, einen Anfang und ein Ende der Stromzufuhr des dritten Stromrichtergeräts (13) steuert, und zwar abhängig von der Spannung des Gleichstrom-Stromverteilungssystems (ESD) und dem zweiten Steuerungsparameter, wobei der erste Steuerungsparameter eine Ladeausgangsspannung umfasst, um die Spannung des Gleichstrom-Stromverteilungssystems (ESD) zu definieren, bei der die Zufuhr von Strom von dem Gleichstrom-Stromverteilungssystem (ESD) zu der ersten Stromspeichereinheit (3) beginnt, und eine Entladeausgangsspannung umfasst, um die Spannung des Gleichstrom-Stromverteilungssystems (ESD) zu definieren, bei der die Zufuhr von Strom von der ersten Stromspeichereinheit (3) zu dem Gleichstrom-Stromverteilungssystem (ESD) beginnt, wobei der zweite Steuerungsparameter eine Gleichstrom-Wechselstrom-Ausgangsspannung umfasst, um die Spannung des Gleichstrom-Stromverteilungssystems (ESD) zu definieren, bei der die Zufuhr von Strom von dem Gleichstrom-Stromverteilungssystem (ESD) zu dem Wechselstrom-Stromversorgungssystem (ESA) beginnt, und eine Wechselstrom-Gleichstrom-Ausgangsspannung umfasst, um die Spannung des Gleichstrom-Stromverteilungssystems (ESD) zu definieren, bei der die Zufuhr von Strom von dem Wechselstrom-Stromversorgungssystem (ESA) zu dem Gleichstrom-Stromverteilungssystem (ESD) beginnt, wobei der Betriebsmodus einen ersten Ansteuerungsmodus umfasst, um eine Menge an Strom, die von dem Wechselstrom-Stromversorgungssystem (ESA) an das Gleichstrom-Stromverteilungssystem (ESD) zugeführt werden soll, zu reduzieren, und wobei der Betriebssteuerungsabschnitt (10c) dazu in der Lage ist, den ersten Steuerungsparameter und den zweiten Steuerungsparameter so einzustellen, dass die Gleichstrom-Wechselstrom-Ausgangsspannung höher ist als die Ladeausgangsspannung, die Entladeausgangsspannung höher ist als die Wechselstrom-Gleichstrom-Ausgangsspannung und die Ladeausgangsspannung gleich oder verschieden ist zu der Entladeausgangsspannung, und zwar wenn der erste Ansteuerungsmodus eingestellt ist.

2. Steuerungssystem für eine Gleichstrom-Stromverteilung (1) nach Anspruch 1, des Weiteren aufweisend einen Informationssammelabschnitt (10a) zum Erfassen von Parametereinstellungsinformation zum Einstellen des ersten Steuerungsparameters und des zweiten Steuerungsparameters, wobei der Betriebssteuerungsabschnitt (10c) den ersten Steuerungsparameter und den zweiten Steuerungsparameter einstellt, und zwar basierend auf der Parametereinstellungsinformation, die erfasst wird durch den Informationssammelabschnitt (10a), und zwar wenn der Betriebsmodus durch den Betriebsmoduseinstellungsabschnitt (10b) geändert wird.

3. Steuerungssystem für eine Gleichstrom-Stromverteilung (1) nach einem der Ansprüche 1 oder 2, wobei der Betriebsmodus einen zweiten Ansteuerungsmodus umfasst zum Schalten der Einstellung des ersten Steuerungsparameters, und zwar abhängig von einer Menge an Strom, die in der ersten Stromspeichereinheit (3) gespeichert ist, das Steuerungssystem einen ersten Informationssammelabschnitt (10a) umfasst zum angemessenen Erfassen der Menge an Strom, die in der ersten Stromspeichereinheit (3) gespeichert ist, und zwar von dem zweiten Stromrichtergerät (12), und zwar während der zweite Ansteuerungsmodus eingestellt ist, und der Betriebssteuerungsabschnitt (10c) die Ladeausgangsspannung und die Entladeausgangsspannung so einstellt, dass je höher die Menge an gespeichertem Strom ist, desto höher werden die Ladeausgangsspannung und die Entladeausgangsspannung, und zwar während der zweite Ansteuerungsmodus eingestellt ist.

4. Steuerungssystem für eine Gleichstrom-Stromverteilung (1) nach einem der Ansprüche 1 bis 3, wobei das Wechselstrom-Stromversorgungssystem (ESA) mit einem kommerziellen Wechselstrom-Stromversorgungssystem verbunden ist, der Betriebsmodus einen dritten Ansteuerungsmodus umfasst zum Steuern einer Stromgebühr, das Steuerungssystem einen zweiten Informationssammelabschnitt (10a) umfasst zum Erfassen von Gebühreninformation über einen Stromkaufpreis und einen Stromverkaufspreis des kommerziellen Wechselstrom-Stromversorgungssystems, wobei diese für jede vorbestimmte Zeitzone eingestellt sind, und zwar wenn der dritte Ansteuerungsmodus eingestellt ist, und

   der Betriebssteuerungsabschnitt (10c)
   die Ladeausgangsspannung höher einstellt als die Gleichstrom-Wechselstrom-Ausgangsspannung und die Entladeausgangsspannung höher einstellt als die Wechselstrom-Gleichstrom-Ausgangsspannung, und zwar in einer Zeitzone, in der der Stromverkaufspreis hoch eingestellt ist, und zwar während der dritte Ansteuerungsmodus eingestellt ist, und die Ladeausgangsspannung niedriger einstellt als die Wechselstrom-Gleichstrom-Ausgangsspannung, und zwar in einer Zeitzone, in der der Stromverkaufspreis niedrig eingestellt ist, und zwar während der dritte Ansteuerungsmodus eingestellt ist.

5. Steuerungssystem für eine Gleichstrom-Stromverteilung (1) nach Anspruch 4, wobei der erste Ansteuerungsparameter einen Ladestromwert umfasst, und zwar in einem Fall, in dem Strom von dem Gleichstrom-Stromverteilungssystem (ESD) zu der ersten Stromspeichereinheit (3) zugeführt wird, und

   der Betriebssteuerungsabschnitt (10c) den Ladestromwert einstellt, und zwar so, dass dieser abhängig von einem Abfall der Spannung des Gleichstrom-Stromverteilungssystems (ESD) verringert wird.

6. Steuerungssystem für eine Gleichstrom-Stromverteilung (1) nach einem der Ansprüche 1 bis 5, wobei der zweite Steuerungsparameter einen maximalen Wechselstrom-Gleichstrom-Stromwert umfasst, und zwar von einem Strom, der von dem Wechselstrom-Stromversorgungssystem (ESA) zu dem Gleichstrom-Stromverteilungssystem (ESD) zugeführt werden soll, und zwar in dem dritten Stromrichtergerät (13).

7. Steuerungssystem für eine Gleichstrom-Stromverteilung (1) nach Anspruch 6, wobei
   der Betriebsmodus einen vierten Ansteuerungsmodus umfasst zum Regeln von Strom, der von dem Wechselstrom-Stromversorgungssystem (ESA) zu dem Gleichstrom-Stromverteilungssystem (ESD) zugeführt werden soll,

   das Steuerungssystem einen dritten Informationssammelabschnitt (10a) umfasst zum Erfassen eines tatsächlichen Werts des verbrauchten Strom des Ladegeräts (4) und eines tatsächlichen Werts einer Menge an Strom, die von dem Photovoltaik-Stromerzeugungsgerät (2) erzeugt wird, und zwar wenn der vierte Ansteuerungsmodus eingestellt ist, und

   der Betriebssteuerungsabschnitt (10c) den maximalen Wechselstrom-Gleichstrom-Stromwert einstellt, und zwar abhängig von dem tatsächlichen Wert des verbrauchten Stroms und dem tatsächlichen Wert der Menge an erzeugtem Strom, und zwar wenn der vierte Ansteuerungsmodus eingestellt ist.

8. Steuerungssystem für eine Gleichstrom-Stromverteilung (1) nach einem der Ansprüche 1 bis 7, wobei der erste Steuerungsparameter einen Ladestromwert umfasst, und zwar in einem Fall, in dem Strom von dem Gleichstrom-Stromverteilungssystem (ESD) zu der ersten Stromspeichereinheit (3) zugeführt wird, und einen maximalen Entladestromwert umfasst, und zwar in einem Fall, in dem Strom von der ersten Stromspeichereinheit (3) zu dem Gleichstrom-Stromverteilungssystem (ESD) zugeführt wird.

9. Steuerungssystem für eine Gleichstrom-Stromverteilung (1) nach Anspruch 8, wobei
   der Betriebsmodus einen Schnellademodus umfasst zum schnelleren Laden der ersten Stromspeichereinheit (3) als gewöhnlich, einen normalen Lade-/Entlademodus umfasst, der von dem Betriebsmoduseinstellungsabschnitt (10b) voreingestellt ist, und einen Langsamentlademodus umfasst zum langsameren Entladen der ersten Stromspeichereinheit (3) als gewöhnlich,

   das Steuerungssystem einen vierten Informationssammelabschnitt (10a) umfasst zum Erfassen von Verschlechterungsinformation über die erste Stromspeichereinheit (3),

   der Betriebsmoduseinstellungsabschnitt (10b) bestimmt, ob sich die erste Stromspeichereinheit (3) verschlechtert oder nicht, und zwar basierend auf der Verschlechterungsinformation, der Betriebsmoduseinstellungsabschnitt (10b) den Betriebsmodus auf den Schnellademodus einstellt, und zwar wenn bestimmt wird, dass sich die erste Stromspeichereinheit (3) verschlechtert, den Betriebsmodus auf den Langsamentlademodus einstellt, und zwar wenn die erste Stromspeichereinheit (3) vollständig geladen ist, den Betriebsmodus auf den Schnelllademodus einstellt, und zwar wenn die Entladung der ersten Stromspeichereinheit (3) beendet ist, und den Betriebsmodus auf den normalen Lade- / Entlademodus einstellt, und zwar wenn die erste Stromspeichereinheit (3) vollständig geladen ist, und der Betriebssteuerungsabschnitt (10c) den Ladestromwert einstellt, und zwar so, dass dieser größer ist als der Ladestromwert in dem normalen Lade-/Entlademodus, und zwar abhängig von einem Kennwert der ersten Stromspeichereinheit (3), und zwar wenn der Schnelllademodus eingestellt ist, und den maximalen Entladestromwert einstellt, und zwar so, dass dieser kleiner ist als der maximale Entladestromwert in dem normalen Lade-/Entlademodus, und zwar abhängig von dem Kennwert der ersten Stromspeichereinheit (3), und zwar wenn der Langsamentlademodus eingestellt ist.

**10.** Steuerungssystem für eine Gleichstrom-Stromverteilung (1) nach einem der Ansprüche 1 bis 9, wobei der Betriebssteuerungsabschnitt (10c) einen dritten Steuerungsparameter auf das erste Stromrichtergerät (11) einstellt, und das erste Stromrichtergerät (11) entweder einen normalen Betrieb zum Ausführen eines Betriebs ausführt, und zwar derart, dass der ausgegebene Strom maximiert wird, oder einen konstanten Spannungsbetrieb zum Ausführen eines Betriebs ausführt, und zwar derart, dass ein ausgegebener Spannungswert konstant ist, und zwar abhängig von der Spannung des Gleichstrom-Stromverteilungssystems (ESD) und dem dritten Steuerungsparameter.

**11.** Steuerungssystem für eine Gleichstrom-Stromverteilung (1) nach Anspruch 10, wobei der dritte Steuerungsparameter eine konstante Spannungsansteuerungs-Ausgangsspannung umfasst, und zwar um die Spannung des Gleichstrom-Stromverteilungssystems (ESD) zu definieren, bei welcher der Betrieb mit konstanter Spannung beginnt.

**12.** Steuerungssystem für eine Gleichstrom-Stromverteilung (1) nach einem der Ansprüche 1 bis 11, des Weiteren aufweisend ein viertes Stromrichtergerät (14) zum Ausführen einer Spannungsumwandlung zwischen einer zweiten Stromspeichereinheit (6) und dem Gleichstrom-Stromverteilungssystem (ESD), wodurch Strom von einer Seite zur anderen Seite zugeführt wird, wobei die zweite Stromspeichereinheit (6) ausgestaltet ist, einen Verbindungaufbau und einen Verbindungsabbau zu bzw. von dem Gleichstrom-Stromverteilungssystem frei auszuführen.

**Revendications**

**1.** Système de commande pour distribution de courant continu (1), comprenant :

un système de distribution de courant continu (ESD) pour fournir du courant continu à un dispositif de charge (4) ;
un premier dispositif de conversion de courant (11) pour réaliser une conversion de tension sur le courant produit à partir du dispositif de production de courant photovoltaïque (2), fournissant ainsi le courant converti au système de distribution de courant continu (ESD) ;
un deuxième dispositif de conversion de courant (12) pour réaliser une conversion de courant entre un premier dispositif de stockage de courant (3) qui est toujours relié au système de distribution de courant continu (ESD), et le système de distribution de courant (ESD), fournissant ainsi du courant, à partir d'un côté, à l'autre côté ;
un troisième dispositif de conversion de courant (13) pour réaliser une conversion de courant entre un système de courant alternatif (ESA) et le système de distribution de courant alternatif (ESD), **caractérisé en ce que**
le système de commande comprend également :

une partie de réglage de mode de fonctionnement (10b) pour régler un mode de fonctionnement du système de commande pour la distribution de courant continu (1) en fonction d'informations de détermination de mode de fonctionnement pour régler le mode de fonctionnement ; et
une partie de commande de fonctionnement (10c) pour régler un premier paramètre de commande et un deuxième paramètre de commande en fonction du mode de fonctionnement réglé par la partie de réglage de mode de fonctionnement (10b),
le deuxième dispositif de conversion (12) ou la partie de commande de fonctionnement (10c) commandent une direction, un démarrage et un arrêt de la fourniture de courant du deuxième dispositif de conversion de courant (12) en fonction d'une tension du système de distribution de courant continu (ESD) et du premier paramètre de commande,
le troisième dispositif de conversion (13) ou la partie de commande de fonctionnement (10c) commandent une direction, un démarrage et un arrêt de la fourniture de courant du troisième dispositif de conversion de courant (13) en fonction de la tension du système de distribution de courant continu (ESD) et du deuxième paramètre de commande,
le premier paramètre de commande comprend une tension de démarrage de charge pour définir la tension du système de distribution de courant continu (ESD) à laquelle le courant commence à être fourni, à partir dudit système de distribution de courant continu (ESD), au premier dispositif de stockage de courant (3), et une tension de démarrage de décharge pour définir la tension du système de distribution de courant continu (ESD) à laquelle le courant commence à être fourni, à partir du premier dispositif de stockage de courant (3), au système de distribution de courant continu (ESD),

le deuxième paramètre de commande comprend une tension de démarrage de courant continu-courant alternatif pour définir la tension du système de distribution de courant continu (ESD) à laquelle le courant commence à être fourni, à partir dudit système de distribution de courant continu (ESD), au système de courant alternatif (ESA), et une tension de démarrage de courant alternatif-courant continu pour définir la tension du système de distribution de courant continu à laquelle le courant commence à être fourni, à partir du système de courant alternatif (ESA), au système de distribution de courant continu (ESD),

le mode de fonctionnement comprend un premier mode d'attaque pour réduire une quantité de courant à fournir, à partir du système de courant alternatif (ESA), au système de distribution de courant continu (ESD), et

la partie de commande de fonctionnement (10c) est apte à régler le premier paramètre de commande et le deuxième paramètre de commande de telle sorte que la tension de démarrage de courant continu-courant alternatif soit supérieure à la tension de démarrage de charge, que la tension de démarrage de décharge soit supérieure à la tension de démarrage de courant alternatif-courant continu, et que la tension de démarrage de charge soit égale à ou différente de la tension de démarrage de décharge quand le premier mode d'attaque est réglé.

2. Système de commande pour distribution de courant continu (1) selon la revendication 1, comprenant également une partie de collecte d'informations (10a) pour acquérir des informations de réglage de paramètres pour régler le premier paramètre de commande et le deuxième paramètre de commande, étant précisé

que la partie de commande de fonctionnement (10c) règle le premier paramètre de commande et le deuxième paramètre de commande sur la base des informations de réglage de paramètres acquises par la partie de collecte d'informations (10a) quand le mode de fonctionnement est modifié par la partie de réglage de mode de fonctionnement (10b).

3. Système de commande pour distribution de courant continu (1) selon l'une quelconque des revendications 1 ou 2, étant précisé

que le mode de fonctionnement comprend un deuxième mode d'attaque pour déclencher le réglage du premier paramètre de commande en fonction d'une quantité de courant stockée dans le premier dispositif de stockage de courant (3),

que le système de commande comprend une première partie de collecte d'informations (10a) pour acquérir de manière appropriée la quantité de courant stockée dans le premier dispositif de stockage de courant (3) à partir du deuxième dispositif de conversion de courant (12) alors que le deuxième mode d'attaque est réglé, et

que la partie de commande de fonctionnement (10c) règle la tension de démarrage de charge et la tension de démarrage de décharge de telle sorte que plus la quantité de courant stocké est grande, plus la tension de démarrage de charge et la tension de démarrage de décharge augmentent alors que le deuxième mode d'attaque est réglé.

4. Système de commande pour distribution de courant continu (1) selon l'une quelconque des revendications 1 à 3, étant précisé

que le système de courant alternatif (ESA) est relié à une alimentation en courant alternatif commerciale,

que le mode de fonctionnement comprend un troisième mode d'attaque pour commander une taxe de courant, que le système de commande comprend une deuxième partie de collecte d'informations (10a) pour acquérir des informations de taxe concernant un prix d'achat de courant et un prix de vente de courant de l'alimentation en courant alternatif commerciale qui sont fixés pour chaque zone horaire prédéterminée quand le troisième mode d'attaque est réglé, et

que la partie de commande de fonctionnement (10c)

règle la tension de démarrage de charge pour qu'elle soit supérieure à la tension de démarrage de courant continu-courant alternatif, et règle la tension de démarrage de décharge pour qu'elle soit supérieure à la tension de démarrage de courant alternatif-courant continu dans une zone horaire dans laquelle le prix de vente de courant est fixé à une valeur élevée alors que le troisième mode d'attaque est réglé, et

règle la tension de démarrage de charge pour qu'elle soit inférieure à la tension de démarrage de courant alternatif-courant continu dans une zone horaire dans laquelle le prix de vente de courant est fixé à une valeur faible alors que le troisième mode d'attaque est réglé.

5. Système de commande pour distribution de courant continu (1) selon la revendication 4, étant précisé que le premier paramètre de commande contient une valeur de courant de charge dans un cas où le courant est fourni à partir du système de distribution de courant continu (ESD) au premier dispositif de stockage de courant (3), et
que la partie de commande de fonctionnement (10c) fixe la valeur de courant de charge pour qu'elle soit réduite en fonction d'une chute de tension du système de distribution de courant continu (ESD).

6. Système de commande pour distribution de courant continu (1) selon l'une quelconque des revendications 1 à 5, étant précisé
que le deuxième paramètre de commande contient une valeur de courant alternatif-courant continu maximale d'un courant à fournir à partir du système de courant alternatif (ESA) au système de distribution de courant continu (ESD) dans le troisième dispositif de conversion de courant (13).

7. Système de commande pour distribution de courant continu (1) selon la revendication 6, étant précisé que le mode de fonctionnement comprend un quatrième mode d'attaque pour la mise à niveau du courant à fournir, à partir du système de courant alternatif (ESA), au système de distribution de courant continu (ESD),
que le système de commande comprend une troisième partie de collecte d'informations (10a) pour acquérir une valeur réelle de courant consommé du dispositif de charge (4) et une valeur réelle d'une quantité de courant produit à partir du dispositif de production de courant photovoltaïque (2) quand le quatrième mode d'attaque est réglé, et
que la partie de commande de fonctionnement (10c) fixe la valeur de courant alternatif-courant continu maximale en fonction de la valeur réelle du courant consommé et de la valeur réelle de la quantité du courant produit quand le quatrième mode d'attaque est réglé.

8. Système de commande pour distribution de courant continu (1) selon l'une quelconque des revendications 1 à 7, étant précisé
que le premier paramètre de commande contient une valeur de courant de charge dans un cas où le courant est fourni à partir du système de distribution de courant continu (ESD) au premier dispositif de stockage de courant (3), et une valeur de courant de décharge maximale dans un cas où le courant est fourni à partir du premier dispositif de stockage de puissance (3) au système de distribution de courant continu (ESD).

9. Système de commande pour distribution de courant continu (1) selon la revendication 8, étant précisé que le mode de fonctionnement comprend un mode de charge rapide pour charger le premier dispositif de stockage de courant (3) plus rapidement que d'habitude, un mode de charge/décharge normal qui est préréglé par la partie de réglage de mode de fonctionnement (10b), et un petit mode de décharge pour décharger le dispositif de stockage de courant (3) plus lentement que d'habitude,
que le système de commande comprend une quatrième partie de collecte d'informations (10a) pour acquérir des informations de détérioration sur le premier dispositif de stockage de courant (3),
que la partie de réglage de mode de fonctionnement (10b) détermine si le premier dispositif de stockage de courant (3) est détérioré ou pas, sur la base des informations de détérioration, quand elle détermine que le premier dispositif de stockage de courant (3) est détérioré, la partie de réglage de mode de fonctionnement (10b) règle le mode de fonctionnement sur le mode de charge rapide, règle le mode de fonctionnement sur le petit mode de décharge quand le premier dispositif de stockage de courant (3) est complètement chargé, règle le mode de fonctionnement sur le mode de charge rapide quand la décharge du premier dispositif de stockage de courant (3) est terminé, et règle le mode de fonctionnement sur le mode de charge/décharge normal quand le premier dispositif de stockage de courant (3) est complètement chargé, et
que la partie de commande de fonctionnement (10c) règle la valeur de courant de charge pour qu'elle soit supérieure à la valeur de courant de charge dans le mode de charge/décharge normal en fonction d'une caractéristique du premier dispositif de stockage de courant (3) quand le mode de charge rapide est réglé, et
règle la valeur de courant de décharge maximale pour qu'elle soit inférieure à la valeur de courant de décharge maximale dans le mode de charge/décharge normal en fonction de la caractéristique du premier dispositif de stockage de courant (3) quand le petit mode de décharge est réglé.

10. Système de commande pour distribution de courant continu (1) selon l'une quelconque des revendications 1 à 9, étant précisé
que la partie de commande de fonctionnement (10c) règle un troisième paramètre de commande pour le premier dispositif de conversion de courant (11), et
que le premier dispositif de conversion de courant (11) réalise soit un fonctionnement normal pour réaliser un fonctionnement tel que le courant de sortie soit maximalisé, soit un fonctionnement à tension constante pour réaliser un fonctionnement tel qu'une valeur de tension de sortie soit constante, en fonction de la tension du système de distribution de courant continu (ESD) et du troisième paramètre de commande.

11. Système de commande pour distribution de courant continu (1) selon la revendication 10, étant précisé que le troisième paramètre de commande comprend une tension de démarrage d'attaque de tension constante pour définir la tension du système de distribution de courant continu (ESD) à laquelle le fonctionnement à tension constante est démarré.

12. Système de commande pour distribution de courant continu (1) selon l'une quelconque des revendications 1 à 11, comprenant également un quatrième dispositif de conversion de courant (14) pour réaliser une conversion de tension entre un dispositif de stockage de courant (6) et le système de distribution de courant continu (ESD), fournissant ainsi du courant à partir d'un côté à l'autre côté, le deuxième dispositif de stockage de courant (6) étant conçu pour réaliser librement une connexion au système de distribution de courant continu (ESD) et une déconnexion de celui-ci.

Fig. 1

EP 2 587 623 B1

| CO$_2$ Reduction Mode |
| Economy Priority Mode |
| Leveling Mode |
| Storage Battery Deterioration Relieving Mode |
| External Command Mode |

Fig. 2

Fig. 3

| Mode | Control Method |
|---|---|
| $CO_2$ Reduction Mode | Minimize an amount of power purchasing from AC power system |
| Economy Priority Mode | Reduce power fee (Switch settings depending on time zone) |
| Leveling Mode | Reduce imbalanace in power purchasing from AC power system among time zones |
| Storage Battery Deterioration Relieving Mode | Use a storage battery so that its lifetime is prolonged |
| External Command Mode | Follow an instruction from outside |

Fig. 4

(CO$_2$ Reduction Mode)

Fig. 5

Fig. 6

Maximum Discharging Current Value
Idch_max

Small ——————————————→ Large   Full   Residual Amount
                                         of Storage Battery

## Fig. 7

Fig. 8

EP 2 587 623 B1

Fig. 9

(CO₂ Reduction Mode)

Fig. 10

Fig. 11

Fig. 12

Discharge Starting Voltage
Vdch_s

360

350

Empty          Large          Residual Amount
                              of Storage Battery

## Fig. 13

Commercial AC Power Supply

Fig. 14

| Power Generation Unit (Wind·Photovoltaic) | Flywheel Unit | Power Storage Unit | System Interconnection Unit | Loading Unit |
|---|---|---|---|---|

**380V** — Abnormal Rise in Voltage·Stop

| | Full | Full | PI Control | Excessive power generation at the time of system power failure |
|---|---|---|---|---|
| | | | 375V | Normal Operation Range |
| MPPT Control | HPF+P Control | PI Control | Stop or Current 0 | |
| (Independent Operation) | (Independent Operation) | (Independent Operation) | 325V | Brink of Power Failure· Selective and Gradual Shut Off of Loads |
| | Empty | Empty | PI Control | Brink of Power Failure· Selective and Gradual Shut Off of Loads |

**355V Center Voltage**

**320V** — Power Failure·Stop

Fig. 15

EP 2 587 623 B1

**EP 2 587 623 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003339118 A